(19) **Europäisches Patentamt / European Patent Office / Office européen des brevets**

(11) **EP 3 462 395 A1**

(12) **EUROPEAN PATENT APPLICATION**

(43) Date of publication:
03.04.2019 Bulletin 2019/14

(51) Int Cl.:
*G06Q 20/06* (2012.01)  *G06Q 20/38* (2012.01)

(21) Application number: 18197065.8

(22) Date of filing: 27.09.2018

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 28.09.2017 KR 20170125788

(71) Applicant: **Kang, Chan Go**
**Seoul 08515 (KR)**

(72) Inventor: **Kang, Chan Go**
**Seoul 08515 (KR)**

(74) Representative: **Monzón de la Flor, Luis Miguel**
**Poeta Joan Maragall, 9**
**esc. Izq 3o Izq.**
**28020 Madrid (ES)**

(54) **METHOD AND SYSTEM FOR GENERATING VIRTUAL MONEY BY E-COMMERCE IN AN OPEN MARKETPLACE**

(57)  A system for generating virtual money by e-commerce in an open marketplace comprising: an open market operation server for providing an electronic money mining process to acquire the electronic money available in the open marketplace through e-commerce in the open marketplace; and a virtual money conversion server for converting the electronic money into a predetermined virtual money that can be traded in a virtual money transaction server, wherein, the open marketplace operation server allows e-commerce in the open marketplace using a purchaser terminal and provides electronic money to the purchaser terminal through the electronic money mining process during the e-commerce process; and the virtual money conversion server converts the electronic money in the purchaser terminal into the virtual money at the request of the purchaser terminal.

Fig. 15

EP 3 462 395 A1

**Description**

CROSS-REFERENCE TO RELATED APPLICATIONS

This application claims the benefit of Korean Patent Application No. 10-2017-0125788 filed with the Korean Intellectual Property Office on September 28, 2017, the disclosures of which are incorporated herein by reference.

TECHNICAL FIELD

The present invention relates to a method and system for generating virtual money by electronic commerce or e-commerce in an open marketplace or an open market, and more particularly, to a method and system for generating virtual money by acquiring market-specific electronic money for use in the open marketplace through e-commerce in the open marketplace and converting the market-specific electronic money into virtual money that can be traded in marketplace economy.

The process of acquiring an open market-specific electronic money through e-commerce and converting the acquired electronic money into a tradable virtual money may correspond to a mining process of virtual money based on a block chain scheme such as a Bitcoin. Therefore, in the present specification, this process will be referred to as mining through e-commerce.

BACKGROUND

Korean Registered Patent No. 10-1591244 (Registered on January 28, 2016) entitled "An apparatus for converting membership points or cyber money into digital virtual money with block chain" discloses a system that converts various types of membership points or cyber money into digital virtual money through a predetermined conversion ratio formula to provide digital virtual money exchange information to the customer.

In the above patent, the conversion ratio formula, which is a measure for determining the value of the digital virtual money, is determined by the 'KRW exchange rate per membership point,' 'weight per membership point,' and 'KRW exchange rate per digital virtual money. Such a conversion ratio formula has the following problems.

First, the 'KRW exchange rate per digital virtual money' refers to the Korean Won (KRW) based exchange rate for digital virtual money announced in real time in a known virtual money exchange, and is a number reflecting the value of the corresponding virtual money in real time, while 'KRW exchange rate per membership point' is determined by each membership point-provider and notified through customer notification about the customer's terms on membership points. Since 'KRW exchange rate per member point' has fixed values while there is no change in terms on membership points it is difficult to link the fluctuating digital virtual money with the fixed membership points.

Second, the 'KRW exchange rate per membership point' announced by different membership point-providers is the value arbitrarily decided by each provider, and there is drawback that it cannot be guaranteed that membership points for different goods or services are converted into KRW or virtual money at an equivalent value ratio.

Third, the "weight per membership points" is weighted according to the number of all members who use the membership points, the deduction ratio when using the membership points and various benefits to be provided by the membership point provider. There is a contradictory situation where the value of virtual money is determined by the provider's decision.

SUMMARY

To solve the above problems, the purpose of the present invention is to provide a system and a method of generating virtual money for realizing real-time interoperability with normal digital virtual money by allowing a user to acquire market-specific electronic money for use in the open marketplace through e-commerce in the open marketplace and convert the market-specific electronic money into virtual money that can be traded in marketplace economy while linking the conversion rate to the performance of e-commerce in the open marketplace, reflecting the performance of e-commerce changed in real time to the value of the electronic money, and allowing the exchange rate of electronic money and virtual money to be determined according to the virtual money trading situation.

In addition, the purpose of the present invention is to provide a system and method of generating virtual money for converting the electronic money into virtual money at an equivalent value ratio regardless of whether electronic money is minded through the purchase of any kind of goods or services by generating only a single kind of open-marketplace-specific electronic money in the e-commerce and converting into virtual money that is tradable in the marketplace economy.

In addition, the purpose of the present invention is to provide a system and method for generating virtual money that is a value-neutral virtual money generation system and method in which decisions of purchasers and sellers do not affect the value of an open-marketplace-specific electronic money or a virtual money by determining the amount and conditions of issuance of an open-marketplace-specific electronic money by an open marketplace operating server while the determining process is operated regardless of the benefits of the purchasers or sellers using the open marketplace.

In addition, the purpose of the present invention is to provide a system and method for generating virtual money for allowing various free opportunities for mining open-marketplace-specific electronic money such as a 'paid Dilling charge', a random additional discount and predetermined promotions or events, allowing e-commerce users to engage in electronic money mining opportunities accompanied by the e-commerce without investing financial effort for mining the electronic money, and compensating the user's resources such as labor and time invested in the e-commerce with the virtual money by converting the minded electronic money into the tradable virtual money.

In addition, the purpose of the present invention is to provide a system and method for generating virtual money for realizing real-time interoperability of the value, issuance amount and issuance condition of open-marketplace-specific electronic money with normal digital virtual money by controlling in real-time at an open marketplace operating server the various free opportunities for mining open-marketplace-specific electronic money such as a 'paid Dilling charge', a random additional discount and predetermined promotions or events to interoperate with the performance of the e-commerce in the open marketplace, and controlling in real-time at a virtual money conversion server the conversion rate of the open-marketplace-specific electronic money to the tradable virtual money.

Technical Solution

To achieve the above purposes, according to some embodiments of the present invention, there is provided a system for generating virtual money by e-commerce in an open marketplace comprising: an open market operation server for providing an electronic money mining process to acquire the electronic money available in the open marketplace through e-commerce in the open marketplace; and a virtual money conversion server for converting the electronic money into a predetermined virtual money that can be traded in a virtual money transaction server, wherein, the open marketplace operation server allows e-commerce in the open marketplace using a purchaser terminal and provides electronic money to the purchaser terminal through the electronic money mining process during the e-commerce process; and the virtual money conversion server converts the electronic money in the purchaser terminal into the virtual money at the request of the purchaser terminal.

Further, the electronic money mining processes comprises: a first electronic money mining process for providing the electronic money more than the value of the securities when the electronic money is purchased by the purchaser terminal using the securities including cash; a second electronic money mining process for providing an additional discount opportunity after payment at an initial purchase price when purchasing products through electronic commerce by the purchaser terminal and providing electronic money corresponding to the additional discount amount; and a third electronic money mining process for providing electronic money through a predetermined event provided by the open marketplace operation server when processing e-commerce by the purchaser terminal.

Further, in the second electronic money mining process, the additional discount amount is determined based on the mining amount of the electronic money through the first, the second and the third electronic money mining processes.

Further, the additional discount amount in the second electronic mining process is determined to a value which satisfies the following condition: $\Sigma C_T - \Sigma D_{Tt} = \Sigma M_{Tt} \geq 0$, where $\Sigma D_{Tt}$ is the sum of the amount of electronic money mined through the first, the second and the third electronic money mining processes for a predetermined period of time, $\Sigma C_T$ is the sum of sales commissions received from all all sellers in the open marketplace operation server according to the sales of the products during the predetermined period, and $\Sigma M_T$ is the profit of the open marketplace operator for the predetermined period calculated by subtracting the sum of the amount of electronic money mined in the first, the second and the third electronic money mining processes from the sum of the sales commission based on sales of all products sold in the predetermined period.

Further, the additional discount amount in the second electronic mining process is determined to a value which further satisfies the following condition: $\Sigma C_T - \Sigma D_{Tt} = \Sigma M_{Tt} \geq \Sigma M_{THt}$, where $\Sigma M_{THt}$ is the threshold margin of the open marketplace operator for the predetermined period.

Further, in the third electronic money mining process, the electronic money is given to purchaser free of charge at the time of purchasing product using a virtual money that has been converted in the virtual money conversion server.

Further, in the third electronic money mining process, the conversion rate between the electronic money and the virtual money in the virtual money conversion server is adjusted for a purchaser at the time of purchasing product using a virtual money that has been converted in the virtual money conversion server.

Further, in the third electronic money mining process, the electronic money is given to purchaser free of charge at the time of purchasing product using an event provided by the open marketplace operation server.

Further, when the coupon provided by the event is not used by the purchaser terminal for a certain period of time, the provision of the same or similar coupon to the purchaser terminal is suspended.

Further, when the coupon provided by the event is not used by the purchaser terminal for a certain period of time, the number of coupons provided to the purchaser terminal is reduced.

Further, when the coupon provided by the event is not used by the purchaser terminal for a certain period of time, the valid period of the coupon provided to the purchaser terminal is reduced.

Further, the conversion rate between the electronic money and the virtual money is determined in the virtual money conversion server based on the face value of the electronic money and the market value of the virtual money.

Further, the conversion rate between the electronic money and the virtual money is determined in the virtual money conversion server based on the amount of the mined electronic money and the market value of the virtual money.

Further, the conversion rate between the electronic money and the virtual money is adjusted by the virtual money conversion server.

Further, when the conversion rate between the electronic money and the virtual money is adjusted by the virtual money conversion server, the open marketplace operation server bears the financial difference of the electronic money due to the adjustment of the conversion rate.

According to some embodiments of the present invention, there is provided a method for generating virtual money by e-commerce in an open marketplace performed by a virtual money generation system including an open market operation server for providing an electronic money mining process to acquire the electronic money available in the open marketplace and a virtual money conversion server for converting the electronic money into a predetermined virtual money that can be traded in a virtual money transaction server, comprising: providing, at the open marketplace operation server, the electronic money to a purchaser terminal through the electronic money mining process during the e-commerce process in the open marketplace; converting, at the virtual money conversion server, the electronic money in the purchaser terminal into the virtual money at the request of the purchaser terminal.

Further, the electronic money mining processes comprises: a first electronic money mining process for providing the electronic money more than the value of the securities when the electronic money is purchased by the purchaser terminal using the securities including cash; a second electronic money mining process for providing an additional discount opportunity after payment at an initial purchase price when purchasing products through electronic commerce by the purchaser terminal and providing electronic money corresponding to the additional discount amount; and a third electronic money mining process for providing electronic money through a predetermined event provided by the open marketplace operation server when processing e-commerce by the purchaser terminal.

Further, in the second electronic money mining process, the additional discount amount is determined based on the mining amount of the electronic money through the first, the second and the third electronic money mining processes.

Further, the additional discount amount in the second electronic mining process is determined to a value which satisfies the following condition: $\Sigma C_T - \Sigma D_{Tt} = \Sigma M_{Tt} \geq 0$, where $\Sigma D_{Tt}$ is the sum of the amount of electronic money mined through the first, the second and the third electronic money mining processes for a predetermined period of time, $\Sigma C_T$ is the sum of sales commissions received from all sellers in the open marketplace operation server according to the sales of the products during the predetermined period, and $\Sigma M_T$ is the profit of the open marketplace operator for the predetermined period calculated by subtracting the sum of the amount of electronic money mined in the first, the second and the third electronic money mining processes from the sum of the sales commission based on sales of all products sold in the predetermined period.

Further, the above method further comprises: performing payment of the purchased product in response to the payment signal from the purchaser terminal; determining the random additional discount amount Di in response to the request for random additional discount from the purchaser terminal; determining if the random additional discount amount Di satisfies the condition $\Sigma C_T - \Sigma D_{Tt} = \Sigma M_{Tt} \geq 0$; returning to the step of determining the random additional discount amount if the random additional discount amount Di dose not satisfy the condition and displaying the random additional discount amount Di on the purchaser terminal if the random additional discount amount Di satisfies the condition; and returning to the step of determining the random additional discount amount if the random additional discount amount Di is rejected by the purchaser terminal and providing electronic money to the purchaser terminal corresponding to the confirmed random additional discount amount if the random additional discount amount Di is confirmed by the purchaser terminal.

Further, the additional discount amount in the second electronic mining process is determined to a value which further satisfies the following condition: $\Sigma C_T - \Sigma D_{Tt} = \Sigma M_{Tt} \geq \Sigma M_{THt}$, where $\Sigma M_{THt}$ is the threshold margin of the open marketplace operator for the predetermined period.

Further, the above method further comprises: performing payment of the purchased product in response to the payment signal from the purchaser terminal; determining the random additional discount amount Di in response to the request for random additional discount from the purchaser terminal; determining if the random additional discount amount Di satisfies the condition $\Sigma C_T - \Sigma D_{Tt} = \Sigma M_{Tt} \geq \Sigma M_{THt}$; returning to the step of determining the random additional discount amount if the random additional discount amount Di dose not satisfy the condition and displaying the random additional discount amount Di on the purchaser terminal if the random additional discount amount Di satisfies the condition; and returning to the step of determining the random additional discount amount if the random additional discount amount Di is rejected by the purchaser terminal and providing electronic money to the purchaser terminal corresponding to the confirmed random additional discount amount if the random additional discount amount Di is confirmed by the purchaser terminal.

Further, the additional discount amount in the second electronic mining process is determined to a value which satisfies the following condition: $\Sigma Cs - \Sigma Ds = \Sigma Ms \geq 0$, where $\Sigma Cs$ is the sum of all sales commissions received from the seller of the selling product in the open marketplace operation server according to the sales of the products of the seller during the predetermined period, $\Sigma Ds$ is the sum of all random additional discount amounts applied to the products sold by the seller of the selling product during the predetermined period, and the sum $\Sigma Ms$ is the sum of profit or margin of the open marketplace operator given by subtracting the sum of the random additional discount from the sum of the sales commissions applied to the products of the seller of the selling product during the predetermined period.

Further, the above method further comprises: performing payment of the purchased product in response to the payment signal from the purchaser terminal; determining the random additional discount amount Di in response to the request for random additional discount from the purchaser terminal; determining if the random additional discount amount Di satisfies the condition $\Sigma Cs - \Sigma Ds = \Sigma Ms \geq 0$; returning to the step of determining the random additional discount amount if the random additional discount amount Di dose not satisfy the condition and displaying the random additional discount amount Di on the purchaser terminal if the random additional discount amount Di satisfies the condition; and returning to the step of determining the random additional discount amount if the random additional discount amount Di is rejected by the purchaser terminal and providing electronic money to the purchaser terminal corresponding to the confirmed random additional discount amount if the random additional amount Di is confirmed by the purchaser terminal.

Further, the additional discount amount in the second electronic mining process is determined to a value which satisfies the following conditions: $\Sigma C_T - \Sigma D_T = \Sigma M_T \geq 0$; $\Sigma Cs - \Sigma Ds = \Sigma Ms < 0$; and $\Sigma C_T - \Sigma D_T = \Sigma M_T \geq \Sigma M_{TH}$, where $\Sigma C_T$ is the sum of sales commissions received from all sellers in the open marketplace operation server according to the sales of the products during the predetermined period; $\Sigma D_T$ is the sum of the amount of all additional discounts during the predetermined period; $\Sigma M_T$ is the profit of the open marketplace operator for the predetermined period calculated by subtracting the sum of the amount of all additional discounts from the sum of the sales commission received from all sellers based on the sales of the products during the predetermined period; $\Sigma M_{TH}$ is the threshold margin of the open marketplace operator set by the open marketplace operation server for all sales of products for the predetermined period; $\Sigma Cs$ is the sum of all sales commissions received from the seller of the selling product in the open marketplace operation server according to the sales of the products of the seller during the predetermined period; $\Sigma Ds$ is the sum of all random additional discount amounts applied to the products sold by the seller of the selling product during the predetermined period; and $\Sigma Ms$ is the sum of profit or margin of the open marketplace operator given by subtracting the sum of the random additional discount from the sum of the sales commissions applied to the products of the seller of the selling product during the predetermined period.

Further, the above method further comprises: performing payment of the purchased product in response to the payment signal from the purchaser terminal; determining the random additional discount amount Di in response to the request for random additional discount from the purchaser terminal; determining if the random additional discount amount Di satisfies the condition $\Sigma C_T - \Sigma D_T = \Sigma M_T \geq 0$; returning to the step of determining the random additional discount amount if the random additional discount amount Di dose not satisfy the condition and, otherwise, determining if the random additional discount amount Di satisfy the second condition $\Sigma Cs - \Sigma Ds = \Sigma Ms \geq 0$; displaying the random additional discount amount Di on the purchaser terminal if the random additional discount amount Di satisfies the second condition and, otherwise, determining if the random additional discount amount Di satisfy the third condition $\Sigma C_T - \Sigma D_T = \Sigma M_T \geq M_{TH}$; returning to the step of determining the random additional discount amount if the random additional discount amount Di does not satisfy the third condition and, otherwise, displaying the random additional amount Di on the purchaser terminal; and returning to the step of determining the random additional discount amount if the random additional discount amount Di is rejected by the purchaser terminal and providing electronic money to the purchaser terminal corresponding to the confirmed random additional discount amount if the random additional amount Di is confirmed by the purchaser terminal.

Further, in the step of converting the electronic money to the virtual money in response to the request from the purchaser terminal, the conversion rate between the electronic money and the virtual money is determined based on the face value of the electronic money and the market value of the virtual money.

Further, in the step of converting the electronic money to the virtual money in response to the request from the purchaser terminal, the conversion rate between the electronic money and the virtual money is determined based on the amount of the mined electronic money and the market value of the virtual money.

Further, in the step of converting the electronic money to the virtual money in response to the request from the purchaser terminal, the conversion rate between the electronic money and the virtual money is adjusted by the virtual money conversion server.

Advantageous Effects

According to the system and method for generating virtual money by e-commerce in an open marketplace according to the present invention, there is provided provide a system and a method of generating virtual money for realizing real-time interoperability with normal digital virtual money by allowing a user to acquire market-specific electronic money for use in the open marketplace through e-commerce in the open marketplace and convert the market-specific electronic money into virtual money that can be traded in marketplace economy while linking the conversion rate to the performance of e-commerce in the open marketplace, reflecting the performance of e-commerce changed in real time to the value of the electronic money, and allowing the exchange rate of electronic money and virtual money to be determined according to the virtual money trading situation.

According to the system and method for generating virtual money by e-commerce in an open marketplace according to the present invention, there is provided a system and a method of generating virtual money for converting the electronic money into virtual money at an equivalent value ratio regardless of whether electronic money is minded through the purchase of any kind of goods or services by generating only a single kind of open-marketplace-specific electronic money in the e-commerce and converting into virtual money that is tradable in the marketplace economy.

According to the system and method for generating virtual money by e-commerce in an open marketplace according to the present invention, there is provided a system and a method of generating virtual money that is a value-neutral virtual money generation system and method in which decisions of purchasers and sellers do not affect the value of an open-marketplace-specific electronic money or a virtual money by determining the amount and conditions of issuance of an open-marketplace-specific electronic money by an open marketplace operating server while the determining process is operated regardless of the benefits of the purchasers or sellers using the open marketplace.

According to the system and method for generating virtual money by e-commerce in an open marketplace according to the present invention, there is provided a system and a method of generating virtual money for allowing various free opportunities for mining open-marketplace-specific electronic money such as a 'paid Dilling charge', a random additional discount and predetermined promotions or events, allowing e-commerce users to engage in electronic money mining opportunities accompanied by the e-commerce without investing financial effort for mining the electronic money, and compensating the user's resources such as labor and time invested in the e-commerce with the virtual money by converting the minded electronic money into the tradable virtual money.

According to the system and method for generating virtual money by e-commerce in an open marketplace according to the present invention, there is provided a system and a method of generating virtual money for realizing real-time interoperability of the value, issuance amount and issuance condition of open-marketplace-specific electronic money with normal digital virtual money by controlling in real-time at an open marketplace operating server the various free opportunities for mining open-marketplace-specific electronic money such as a 'paid Dilling charge', a random additional discount and predetermined promotions or events to interoperate with the performance of the e-commerce in the open marketplace, and controlling in real-time at a virtual money conversion server the conversion rate of the open-marketplace-specific electronic money to the tradable virtual money.

BRIEF DESCRIPTION OF THE DRAWINGS

Fig. 1 is a schematic diagram of a virtual money generation system by e-commerce in an open marketplace according to some embodiments of the present invention.

Fig. 2 is a block diagram of a virtual money generation system by e-commerce in an open marketplace according to some embodiments of the present invention.

Fig. 3 is a block diagram of a virtual money transactions between a virtual money conversion server and a virtual money transaction server according to some embodiments of the present invention.

Fig. 4 is a block diagram of an electronic money and a virtual money conversion between an open marketplace operating server and a virtual money conversion server according to some embodiments of the present invention.

Fig. 5 is a block diagram of an open marketplace operation server according to some embodiments of the present invention.

Fig. 6 is a block diagram of a database in an open marketplace operation server according to some embodiments of the present invention.

FIG. 7 is a flowchart for determining a random additional discount amount in an open marketplace operating server according to some embodiments of the present invention.

Fig. 8 is a flow chart for determining a random additional discount amount in an open marketplace operating server according to some embodiments of the present invention.

Fig. 9 is a block diagram of a third Free-Dilling mining process provided by an open marketplace operating server according to some embodiments of the present invention.

Fig. 10 is a block diagram of a third Free-Dilling mining process provided by an open marketplace operation server according to some embodiments of the present invention.

Fig. 11 is an exemplary diagram of a third Free-Dilling mining process provided by an open marketplace operating server according to some embodiments of the present invention.

Fig. 12 is an exemplary diagram of coupon usage in an open marketplace operation server according to some embodiments of the present invention.

Fig. 13 is another exemplary diagram of coupon usage in an open marketplace operation server according to some embodiments of the present invention.

Fig. 14 is another examplary diagram of coupon usage in an open marketplace operation server according to some embodiments of the present invention.

Fig. 15 is a flowchart of a method for generating virtual money by e-commerce in an open marketplace according to some embodiments of the present invention.

DESCRIPTION OF EMBODIMENTS

Hereinafter, the present invention will be described with reference to the accompanying drawings. Although the present invention has been described with reference to some embodiments of the present invention, the scope of the present invention is not limited to the above embodiments. For the sake of clarity, the detailed description for insignificant part of the present invention may be omitted, and the same reference numerals are given to the same components throughout the specification, if available.

It is to be understood that when an element is referred to as "comprising" in the specification and claims it does not exclude the other elements unless specifically stated otherwise.

In addition, operations performed in a plurality of separately described servers or terminals may be performed in an integrated single or a few server(s) or terminal(s), and such changes may be freely performed by those skilled in the art.

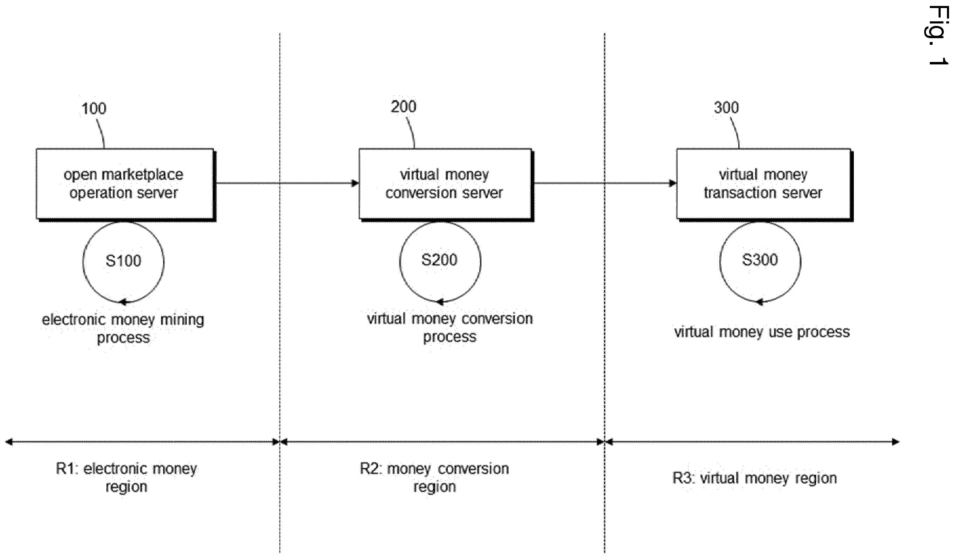

Fig. 1 is a schematic diagram of a virtual money generation system by e-commerce in an open marketplace according to some embodiments of the present invention.

The system of Fig. 1 comprises an open marketplace operation server 100 that provides an electronic money mining process S100 capable of mining an open-marketplace-specific electronic money by e-commerce in an open marketplace, a virtual money conversion server 200 that provides a virtual money conversion process S200 for converting the mined money into a normal digital money, i.e., a virtual money capable of being traded with another kinds of virtual money, and a virtual money transaction server 300 that provides a virtual money use process S300 for mutually exchanging various virtual moneys including the virtual money converted by the virtual money conversion server 200.

The electronic money used in the electronic money mining process S100 by the open marketplace operating server 100 is an open marketplace electronic money provided by the open marketplace operating server 100 for use only in the open marketplace, and thus this region is referred to as an electronic money region R1 for open marketplace only.

In the virtual money conversion process S200 by the virtual money conversion server 200, the electronic money for open marketplace only is converted into the virtual money. Since the virtual money is a kind of normal virtual money that can be traded with another normal virtual money, this region is referred to as a money conversion region R2.

In the virtual money use process S300 by the virtual money transaction server 300, the virtual money that has been converted in the money conversion region R2 can be traded at a predetermined ratio or exchange rate with another normal virtual money. This region is the same as a conventional virtual money marketplace except that the virtual money generated by the electronic money mining process S100 and the virtual money conversion process S200 is traded. Thus, this region is referred to as a virtual money region R3.

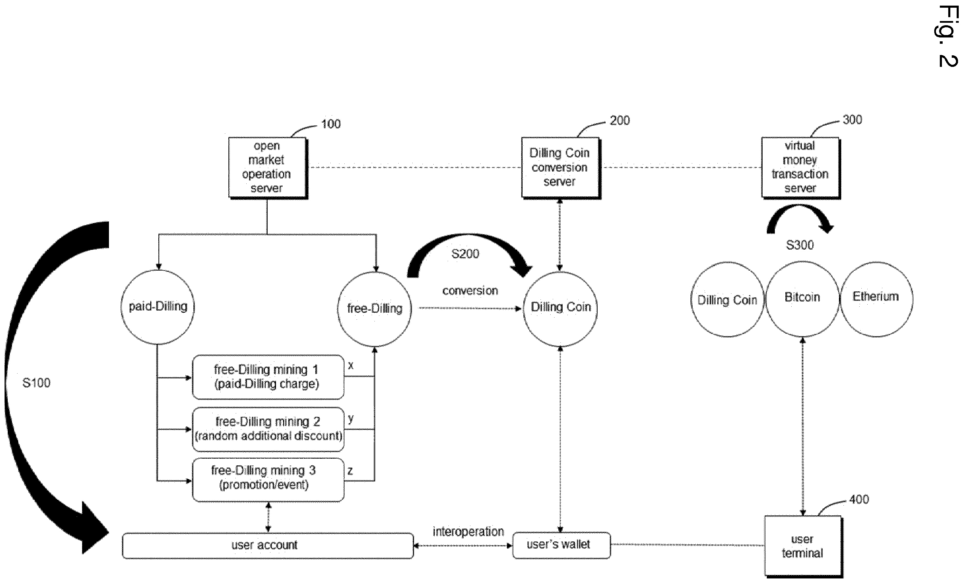

Fig. 2 is a block diagram of a virtual money generation system by e-commerce in an open marketplace according to some embodiments of the present invention.

In this embodiment, the unit of the electronic money for use in the open marketplace only in the electronic money region R1 is referred to as "Dilling". When a Dilling used only in the open marketplace is converted into a virtual money that can be traded in the money conversion region R2, the converted virtual money is referred to as "Dilling Coin". Therefore, Dilling can be considered as a kind of electronic money for use in the open marketplace of the present invention and Dilling Coin can be considered as a kind of virtual money that can be traded with other normal virtual money in a virtual money marketplace.

The term "Dilling" is provided for convenience of description and distinction from other electronic money or virtual money, so any kinds of electronic money used exclusively for the open marketplace in the electronic money region R1 can be replaced with Dilling of the present embodiment. Further, any kinds of virtual money can be replaced with a Dilling Coin in this embodiment if they were converted from an open-marketplace-specific electronic money in the money conversion region R2 and can be traded in the virtual money region R3.

In Fig. 2, Dilling is an open-marketplace-specific payment means, and it can be classified into a paid-Dilling and a free-Dilling. The paid-Dilling is a Dilling that can be charged using cash or open marketplace vouchers, credit cards, other securities or even virtual money, which means a kind of Dilling that can be acquired on a fee. It is the same concept as the usual electronic money used in conventional electronic commerce.

The free-Dilling is used only in some embodiments of the present invention, and can be acquired by a predetermined mining process in the electronic commerce, that is, (1) mining a bonus Dilling through charging (or purchasing) of paid-Dilling, (2) mining through a random additional discount which will be described in detail in the specification, and (3) mining through participation in a predetermined promotion or an event provided by the open marketplace operation server 100. The free-Dilling may not be purchased by cash or open marketplace gift voucher, a credit card, securities or virtual money, but can be acquired only through the above-mentioned predetermined mining process provided by the open marketplace operating server 100. In Fig. 2, such mining processes are collectively referred to as an electronic money mining process S100.

The free-Dilling obtained through the electronic money mining process S100 has the same value as the paid-Dilling purchased by the user, and both are accumulated in the user account of each user and used for purchasing goods or services through electronic commerce.

Meanwhile, the user accesses the Dilling Coin conversion server 200 (a kind of virtual money conversion server 200) and performs a virtual money conversion process S200 for converting the free-Dilling accumulated in the user account into the Dilling Coin which is a kind of virtual money that can be traded in the virtual money region R3. The paid-Dilling can also be converted into the Dilling Coin by the virtual money conversion process S200. However, considering the conversion rate when the paid-Dilling is converted into the Dilling Coin and the fluctuation in the value of the virtual money, i.e., Dilling Coin, the free-Dilling might be more attractive candidate for conversion into the Dilling Coin than the paid-Dilling.

The Dilling Coin which is a virtual money generated through the conversion in the Dilling Coin conversion server 200 may be registered in the virtual money transaction server 300, a marketplace for trading a virtual money, and can be traded with other types of registered virtual money such as Bitcoin, Etherium and so on. The process of registering the virtual money in the marketplace and making transactions possible is called ICO (Initial Coin Offering), which is a known concept and will not be described in detail.

The user can use a user's wallet for accumulating virtual money in his or her own user terminal 400. The user's wallet is a kind of cyber wallet that is interoperated with the Dilling Coin conversion server 200 and the virtual money transaction server 300 for use in both the money conversion region R2 and the virtual money region R3. It may also be interoperated with the user account in the electronic money region R1. To this end, the user terminal 400 is preferably provided with a predetermined software application that can be used in both the electronic money region R1, the money conversion region R2, and the virtual money region R3.

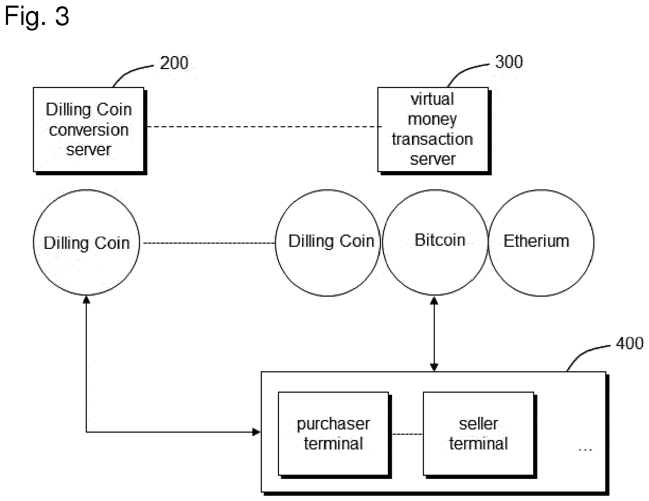

Fig. 3 is a block diagram of a virtual money transactions between a virtual money conversion server and a virtual money transaction server according to some embodiments of the present invention.

The concept of the virtual money transaction in FIG. 3 is the same as that described in FIG. 2 except that the user terminal 400 is divided into the purchaser's terminal and the seller's terminal.

In Fig. 3, a purchaser refers to a buyer who desires to purchase a Dilling Coin and a seller refers to a seller who desires to sell a Dilling coin, and they are distinguished from the purchaser and the seller of goods / services in the electronic money region R1.

A purchaser who wishes to purchase a Dilling Coin may request for purchasing Dilling Coin by accessing a Dilling Coin conversion server 200 that can only perform conversion and transaction of Dilling Coins or accessing a virtual money transaction server 300 that can deal with various types of virtual money.

The purchasing request message of the purchaser is delivered to the seller through the Dilling Coin conversion server 200 or the virtual money transaction server 300 in the form of a push message, for example. When a seller who agrees with the price and amount designated by the purchaser, an amount of encrypted Dilling Coin may be transmitted from the seller (i.e., the seller's terminal or the seller's wallet) to the purchaser (i.e., the purchaser's terminal or the purchaser's wallet).

When the purchaser checks the payment, the seller who has confirmed the payment may transmit a key for decrypting the password of the encrypted Dilling Coin. The purchaser may release the password to enable the Dilling Coin using the transmitted key.

Meanwhile, in order to stabilize the process of purchase and sale of the Dilling Coin, the process of sending purchase request, transmitting the encrypted Dilling Coin, paying the purchase price, and activating the Dilling coin is preferably performed by the Dilling Coin conversion server 200 or the virtual money transaction server 300 that is allowed to trade the Dilling Coin.

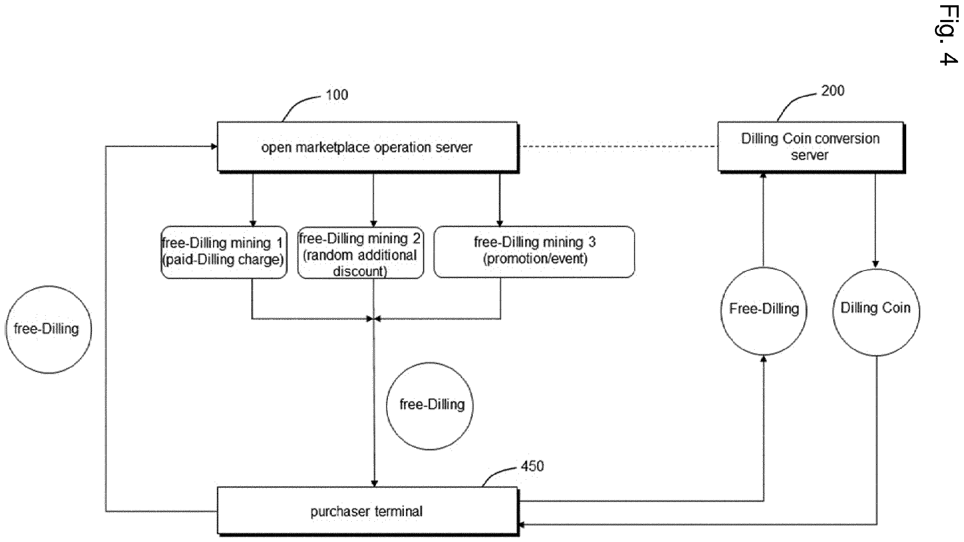

Fig. 4 is a block diagram of an electronic money and a virtual money conversion between an open marketplace operating server and a virtual money conversion server according to some embodiments of the present invention.

In FIG. 4, a "Dilling" is defined as a unit of electronic money in the electronic money region R1 and the virtual money in the money conversion regioin R2 is limited to the "Dilling Coin" only.

In the electronic money region R1, the open marketplace operating server 100 provides a plurality of electronic money mining processes S100 such as a first free-Dilling mining process (which is a paid-Dilling charge), a second free-Dilling mining process (which is a random additional discount), a third free-Dilling mining process (which is an open marketplace promotion or event).

First, the first free-Dilling mining process is a process of purchasing a paid-Dilling using a cash, an open-marketplace gift certificate, a credit card, other types securities, virtual money, etc. to accumulate the paid-Dilling in a user account of the purchaser's terminal 450. Here, 1 to 10% of the charged or paid amount, for example, can be additionally accumulated as a bonus free-Dilling.

Next, the second free-Dilling mining process is a process of accumulating an amount of free-Dilling corresponding to the discounted amount that is determined according to a random additional discount mechanism of the present invention, which will be described in detail later.

Finally, the third free-Dilling mining process is a process of earning free-Dilling, which is directly or indirectly obtained by the user through participation in a certain promotion or event provided by the open marketplace operator through the open marketplace operating server 100. The unique promotion or event mechanism provided by the present invention will be described later.

Meanwhile, the purchaser who wishes to purchase a product can purchase goods or services on the open marketplace provided by the open marketplace operation server 100 by using the accumulated free-Dilling or convert the accumulated free-Dilling into Dilling Coins at a predetermined conversion rate in the Dilling Coin conversion server 200 which is interoperated with the open marketplace operation server 100.

The conversion rate for converting the free-Dilling to the Dilling Coin is determined by the Dilling Coin conversion server 200, which varies in real-time based on the results or performance of the open marketplace electronic commerce in the open marketplace operation server 100. Thus, the factors that determine the Dilling Coin conversion rate include bonus free-Dilling accumulation amount in the first free-Dilling mining process, random additional discount amount in the second free-Dilling mining process, free-Dilling accumulation amount due to promotions or events in the third free-Dilling mining process.

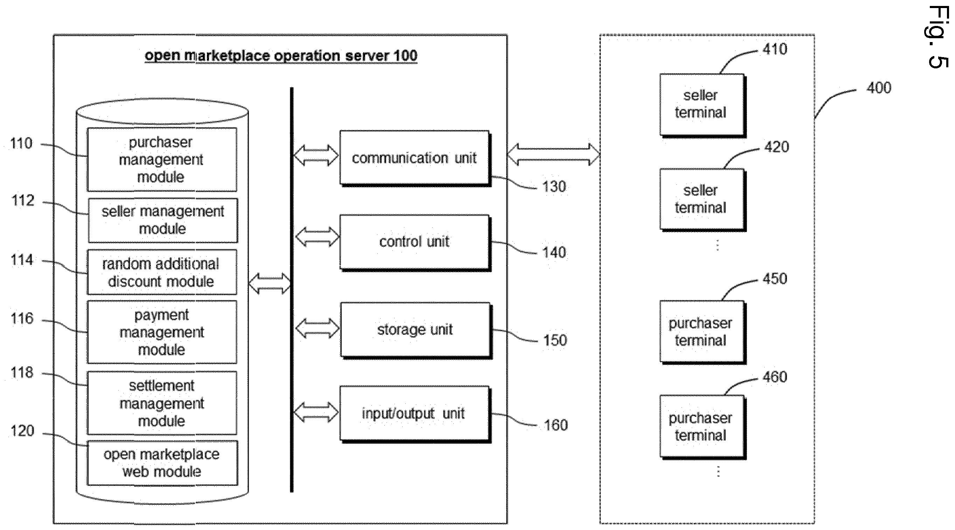

Hereinafter, the free-Dilling mining process in the electronic money region R1 will be described in detail with reference to Fig. 5 through Fig. 15.

Fig. 5 is a block diagram of an open marketplace operation server according to some embodiments of the present invention.

The open marketplace operating server 100 of FIG. 5 comprises a communication unit 130 for communicating with the user terminal 400 including the seller's terminals 410 and 420 and the purchaser's terminals 450 and 460, an input / output unit 160 for receiving input from the user terminal 400 and providing an output to the user terminal 400, a storage unit 150 for storing a program including various data and algorithms necessary for operating the open marketplace, and a control unit 140 for performing a control process for purchasing / selling of goods or services in the open marketplace using various data stored in the storage unit 150 according to the input from the user terminal 400 and for performing a first, second and third free-Dilling mining processes according to some embodiments of the present invention.

The functions of the control unit 150 may be divided into several types and provided as separate modules and the modules may comprise a purchaser management module 110, a seller management module 112, a random additional discount module 114, a payment management module 116, a settlement management module 118, an open marketplace web module 120, and the like. In FIG. 5, the controller 150 may be understood as a narrower concept only for performing control functions other than those performed by the above-identified modules.

In the present specification, the term 'random additional discount' means that a random additional discount amount according to a predetermined condition is applied to the purchase price of target goods or services, and the random discount is performed by additionally giving a randomized discount to the purchase price at the time of finalizing the purchase or by additionally giving free-Dillings corresponding to the discount amount. In other words, it may be implemented as a process of canceling an initially paid purchase price and applying a discounted purchase price according to an embodiment or may be implemented as a process of accepting an initial purchase price but providing free-Dilling corresponding to a discount amount according to another embodiment.

Therefore, the term "discount" is used for both the case of extracting the discount amount to apply the discounted purchase price and the case of extracting the free-Dilling issuing amount corresponding to the discount amount.

Now, the function and the procedure performed in Fig. 5 will be described.

First, each seller terminal 410, 420 of different sellers is registered in a seller management module 112 of the open marketplace operation server 100 based on a prior agreement to pay a predetermined sales commission to the open marketplace operator. The product information (hereinafter, both the goods and the service are collectively referred to as products) such as the basic information, image, price, and other sales conditions of the random additional discounted products are registered in the seller management module 112 and posted on the open marketplace web site (including both a regular web site and a mobile web site) by the open marketplace web module 120.

If the open marketplace is a random additional discount open marketplace offering a random additional discount service for all the products, all the products registered by the seller terminals 410 and 420 become random additional discounted goods. When the random additional discount corner is operated as a specific corner of the open marketplace, the seller terminals 410 and 420 may divide the random additional discounted products and other products and post them on the open marketplace web site separately.

In some cases, when a free-Dilling mining process through a random additional discount is conducted through an agreement between an open marketplace operator and a seller, a period and conditions for random additional discount may be presented to the open marketplace operator by the seller and the open marketplace operator may accept them.

In other cases, the open marketplace operator may provide a random additional discount for the purchaser's free-Dilling mining only for the products of a particular seller, and such a particular seller is preferably a paid merchant member who pays the monthly membership fee, for example.

The open marketplace operator may provide free-Dilling opportunities including free-Dilling by charging of paid-Dillings, free-Dilling by random additional discount and free-Dilling offer promotion or event based on financial resource such as sales commission from sales of each seller and the fees received from the paid members of seller and / or purchasers.

Each buyer accesses the open marketplace web site through his / her purchaser terminals 450 and 460 to join a paid or free membership. Alternatively, he or she may use an open marketplace provided by the open marketplace operation server 100 without joining a member.

However, the opportunity of the first, second and third free-deal mining processes such as providing bonus free-Dillings through charging of paid-Dillings, providing free-Dillings based on random additional discounts, and offering free-Dillings to purchasers through promotion or event is preferably given to those who subscribe as a paid member and pays, for example, a monthly membership fee. This is because the open marketplace operator can make the free-Dilling mining process more smoothly with fee paid by the purchaser member who is a paid member.

When a purchaser desires to purchase a target product for random additional discount, the random additional discount module 114 communicates with the purchaser terminal 450 (hereinafter, only one purchaser terminal will be described for clarity of explanation) to receive a signal for purchasing the target product at an initial price (e.g., the original selling price offered by the seller or the discounted price of the seller who firstly discounted the original price using a promotional discount coupon of the purchaser) as a payment request for the target product from the purchaser terminal 450.

If the target product is not subject to a random additional discount, the payment request of the purchaser terminal is immediately processed as a final payment request, and the actual payment of the goods is performed. If the product is a target for a random additional discount, the payment request of the purchaser terminal is processed as a confirmation of purchase and a request to start a random additional discount procedure, and then a random additional discount procedure is performed for the target product.

The random additional discount module 114 may provide a random additional discount mark to the purchaser terminal 450 to induce participation in the random additional discount procedure when payment request is made by the purchaser terminal 450, and the purchaser may provide a request for random additional discount to the random additional discount module 114 by clicking or selecting the random additional discount mark displayed on the purchaser terminal 450.

The random additional discount module 114 determines a random additional discount amount by selecting a discount rate of, for example, 1% to 100% with respect to the initial price in response to the request for random additional discount from the purchaser terminal 450. A discount rate of 1% to 100% means that in some cases, the product may be purchased free of charge, in addition to providing a minimum discount.

In this way, discounting or providing free of charge for all products can be performed only during a predetermined promotion period in the case of an ordinary open marketplace, but in the present invention, discounts are provided for all the products at all times during the open marketplace operation period and it may provide the goods free of charge in some cases.

This is because the open marketplace operator of the present invention provides the discount for the product not at the seller level but at the level of the open marketplace operator who oversees the sale of the whole products by all the sellers. Since the random additional discount amount for each random additional discount target product is calculated according to a predetermined random additional discount amount calculation algorithm that uses the membership fees received from the purchaser and seller and sales commission from the purchaser as the entire financial resources, it becomes possible to provide discounts on all products at all times and free goods by using the random additional discount amount calculation algorithm within the scope of the financial resources.

Meanwhile, the random additional discounting module 114 controls the amount of free-Dillings based on total amount of a bonus free-Dilling according to the purchase of a paid-Dilling (which is a first free-Dilling mining process), a free-Dilling by a random additional discount (which is a second free-Dilling mining process) and free-Diiling by a promotion or event (which is a third free-Dilling mining process) as well as conversion rate adjustment between free-Dilling and Dilling Coin.

Of course, the function of issuing free-Dilling through the first, second and third free-Dilling mining processes may be performed by separate functional hardware / software modules of the open marketplace operating server under a control by the control unit 140, it is assumed that the related control function is performed intensively by the random additional discount module 114 in the present embodiment.

When the first, second and third free-Dilling mining processes are all performed by the random additional discount module 114, the random additional discount calculation algorithm may independently derive the free-Dilling provision amount for each free-Dilling mining process. However, in order to smoothly operate the open marketplace and provide free-Dilling of stable quantity, it is desirable to calculate the free-Dilling amount for each free-Dilling mining process considering a total amount of free-Dilling mined through the above free-Dilling mining processes, and determine the random additional discount amount in the second mining process based on the total amount of free-Dilling.

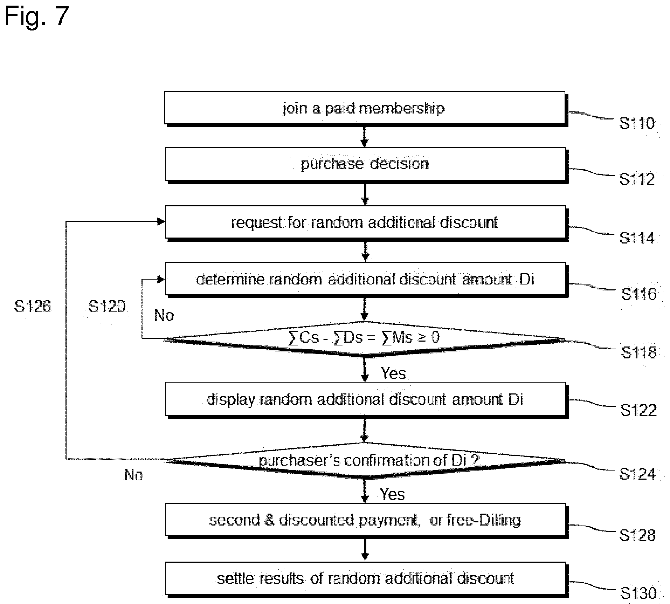

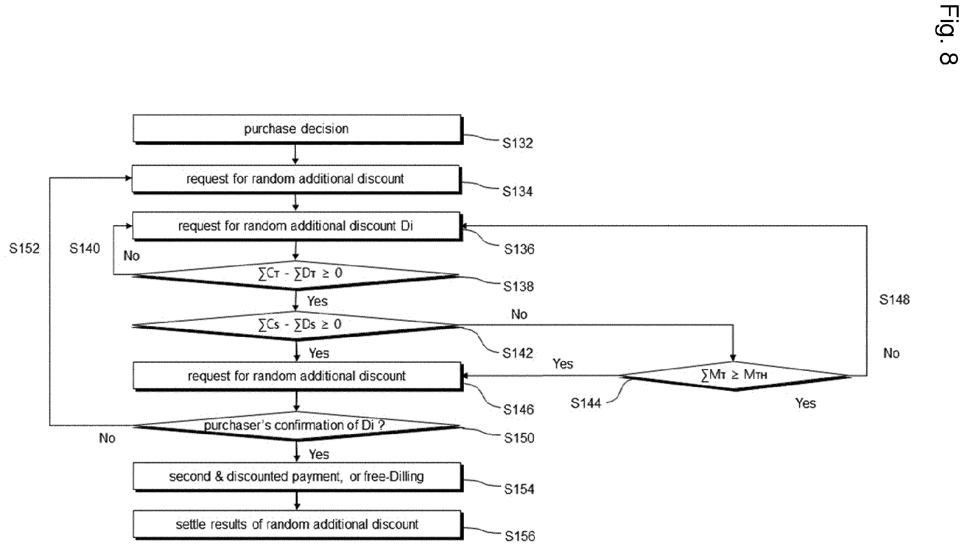

A detailed random additional discount determination mechanism performed by the random additional discount module 114 will be described later with reference to Figs. 7 and 8.

If the random additional discount module 114 determines the amount of the random additional discount, the open marketplace operator's operation policy will (1) let the purchaser pay at a discounted price (i.e., cancel the initial payment and get a re-payment at a new price discounted by the random additional discount amount), (2) provide free-Dilling as much as the random additional discount and then settle the payment using the free-Dilling (i.e., lower the initial price by the discount amount with the free-Dilling and settle the payment at a lowered price), (3) or provide free-Dilling as much as the random additional discount and allow the purchaser to use it for payment for other products in the future or to use it for converting into Dilling Coin. Depending on the embodiment, the purchaser may be given the option of the above three random additional discount scheme.

When the random additional discount amount is determined through the random additional discount process, the payment management module 116 is notified from the random additional discount module 114 that the final purchase amount for discounted payment of the purchased product has been confirmed, in response to the notification, the payment management module 116 interoperates with the purchaser terminal 450, a payment gateway (not shown), an external financial institution (not shown) such as a card company or a bank to proceed with the payment for the random additional discounted product and store related records.

Alternatively, if free-Dilling is issued as in (2) and (3) above, the related information is transferred from the random additional discounting module 114 to the payment management module 116, and the payment management module 116 collects the free-Dilling information to carry out the payment of the product and store the payment information.

Further, the payment management module 116 transmits the payment information for each purchaser to the purchaser management module 110 and transmits the payment information for each seller to the seller management module 112. The payment management module 116 also transmits the payment information for each seller and each product to the settlement management module 118 so that the discount grant for the random additional discount from the open marketplace operator to sellers and the sales commission from sellers to the open marketplace operator may be settled afterwards.

The settlement management module 118 calculates a discount grant amount to be paid to each seller based on the payment information for each seller and each product received from the payment management module 116. The discount grant amount corresponds to the random additional discount amount or the amount of issued free-Dilling.

Subsequently, the settlement management module 118 offsets the total sales commission to be received from each seller by the total discount to be paid to each seller for a predetermined period of time and receives a reduced sales commission from each seller for that period.

In some cases, the total discount grant for an individual seller may be greater than the total sales commission for that seller during a predetermined period (i.e., the settlement period), but, when the entire sellers are considered, the total sales commission shall always be maintained to be greater than or equal to the total discount grant.

In addition, during a predetermined short period of time, the total amount of the discount grant for all sellers may be greater than the total amount of sales commission from all sellers, but when a longer period than the predetermined period is considered, the total amount of sales commission from all sellers is preferably maintained to be greater than or at least equal to the total amount of discount grant to all sellers.

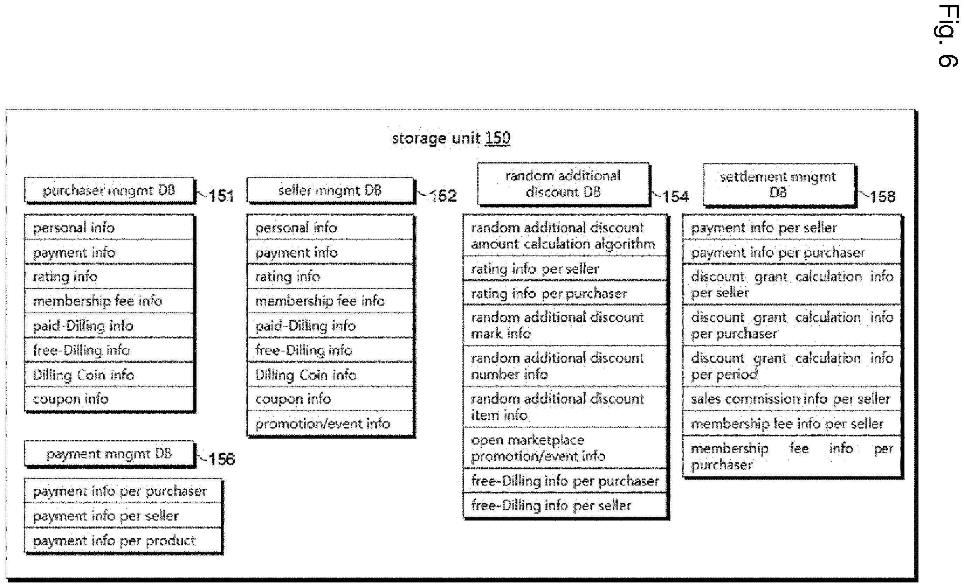

Fig. 6 is a block diagram of a database in an open marketplace operation server according to some embodiments of the present invention.

In Fig. 6, the database is shown to be stored in the storage unit 150 of the open marketplace operating server 100 of Fig. 5, some or all parts of the database may be distributed and stored in the respective modules or the control unit 140 of Fig. 5.

First, the purchaser management DB 151 is a database of various data necessary for the operation of the purchaser management module 110. The purchaser management DB 151 stores basic purchaser information for each purchaser including personal information (if the purchase is a corporation, then the corporation information), payment information, rating information, membership fee information, paid-Dilling information, free-Dilling information, Dilling Coin information and coupon information as well as other data necessary for e-commerce activities in the open marketplace and various indicator information that can be used for measuring the usage status of the open marketplace.

The rating information for each purchaser means a user grade set by the open marketplace operation server 100 according to the open marketplace usage status of the purchaser, and the paid-Dilling information for each purchaser includes information of paid-Dilling that the purchase has acquired using a cash, open marketplace gift certificate, a credit card, securities or virtual money and history information on the purchase of products in the open marketplace using the paid-Dilling.

The free-Dilling information for each purchaser includes information on the free-Dilling that the purchaser has obtained through the first, second and third free-Dilling mining processes and history information on the purchase of the products in the open marketplace using the free-Dilling. The Dilling Coin information for each purchaser includes information on Dilling Coin that has been converted from the free-Dilling (or in some cases, paid-Dilling) in the Dilling Coin conversion server 200, information on Dilling Coin recorded in the user's wallet interoperated with the user account of the purchaser, and history information on the purchase of products in the open marketplace using the Dilling Coin.

The coupon information for each purchaser includes information on the coupon given to the purchaser, the coupon usage status, and additional coupon and free-Dilling information given to the purchaser according to the coupon usage of the purchaser.

Then, the seller management DB 152 is a database of various data necessary for the operation of the seller management module 112. The seller management DB 152 stores seller-related information for each seller including personal / corporation information, payment information, rating information, membership fee information, paid-Dilling information, free-Dilling information, Dilling Coin information, coupon information, and promotional / event information for each seller.

The rating information for each seller indicates the user grade determined by the open marketplace operation server 100 according to the open marketplace sales status of the seller, and paid-Dilling information for each seller includes information of paid-Dilling obtained by the seller during e-commerce and history information on the sales of products using the paid-Dilling. When the seller may purchase the products or paid-Dillings as a purchaser in the open marketplace, in this case, the relevant information on the purchase is stored in the purchaser management DB 151. Of course, when the purchaser management DB and the seller management DB are not strictly separated according to the structure of the database, information for purchaser and seller for each individual or corporation can be managed in a single database.

Meanwhile, the free-Dilling information for each seller includes information on the free-Dilling provided to his / her purchaser by the open marketplace operator through the free-Dilling event, which is the third free-Dilling mining process, based on the coupon issued by the seller to the purchaser and used by the purchaser for purchasing the seller's product, and history information on the sales of products in the open marketplace through transactions using the free-Dilling.

The Dilling Coin information for each seller includes information on the Dilling Coin obtained by the seller during the e-commerce and history information on the sales of products in the open marketplace using the Dilling Coin.

The coupon information for each seller includes information on the coupon given to each purchaser by the seller and history information of the sales of products using coupons.

The random additional discount DB 154 may include a random additional discount amount calculation algorithm used at the time of determining the random additional discount price in the random additional discount module 114, rating information for each seller, rating information for each purchaser, random additional discount mark information, random additional discount number information (i.e., information indicating the number of random additional discounts that can be offered), random additional discount item information, open marketplace promotion / event information, information on free-Dilling by random additional discount for each purchaser, and information on free-Dilling by random additional discount for each seller.

The rating information for each purchaser and each seller are the same as those stored in the seller management DB 152 and the purchaser management DB 151. The discount rate of the random additional discount may be determined or at least affected by rating information given to each seller and each purchaser.

Random additional discount mark is provided to the purchaser terminal 450 to indicate that the product is a random additional discount item. It can also be provided to the purchaser to indicate that another request for random additional discount is possible when the purchaser desires to get another random additional discount after a prior-random additional discount has already been applied to him or her. In addition, random additional discount mark information may include information on coupons for giving additional random discount opportunities.

The random additional discount number information is information indicating the number of random additional discounts that can be offered to the purchaser who repeatedly requests a random additional discount, and the information may store and set a random additional discount number for each product, purchaser, and seller. In the case of a purchaser having a random additional discount coupon, the random additional discount number information is updated according to the contents of the coupon.

The random additional discount item information is information of the product to which the random additional discount may be applied. In addition to the random additional discount item specified by the seller, the random additional discount item may be designated in advance by the open marketplace operation server 100. The random additional discount item may further be designated by the open marketplace operation server 100 in response to a request from a purchase during a purchasing process.

The open marketplace promotion / event information is information indicating the amount of free-Dilling mined according to the third free-Dilling mining process. The amount of free-Dilling or the random additional discount amount at the random additional discount process is determined in consideration of the total free-Dilling mining amount in the open marketplace.

Random addition discount free-Dilling information for each purchaser is free-Dilling amount information obtained through the first, second and third free-Dilling mining processes for each purchaser. Random addition discount free-Dilling information for each seller is free-Dilling amount information obtained through the first, second and third free-Dilling mining processes for each seller. These information are used to take into account the total free-Dilling mining amount in the open marketplace for each purchaser and seller when a random additional discount is applied to the purchaser and seller.

The payment DB 156 includes payment information for each purchaser, payment information for each seller, and payment information for each product. The payment information for each purchaser and the payment information for each seller are the same as those stored in the purchaser management DB 151 and the seller management DB 152. The payment information for each product covers all the products sold in the open marketplace and includes price information and free-Dilling information before and after the application of a random additional discount or coupon.

The settlement management DB 158 stores settlement management information such as payment information for each seller, payment information for each purchaser, discount grant calculation information for each seller, discount grant calculation information for each purchaser, discount grant calculation information for each period, sales commission information for each seller, membership fee information for each seller, membership fee information for each purchaser, and usage information of cash / credit card / voucher / paid-Dilling / free-Dilling.

The discount grant calculation information for each seller, purchaser and period are the discount grant information calculated in the random additional discounts and are stored separately according to the seller, the purchaser and the period.

The sales commission information for each seller stores the sales commission (for example, 5 to 30% of the selling price, usually about 20% of the selling price) that has been provided or will be provided from each seller to the open marketplace operator according to the sales of each product. The membership fee information for each seller and purchaser are information on the membership fee paid by the seller and the purchaser to the open marketplace operator, respectively.

The information in the settlement management DB 158 should include the selling price and sales commission of all products sold by the open marketplace operation server 100 and membership fee of each purchaser or seller, that may be used to provide discount grants or free-Dilling as the profit of the open marketplace operators. The information in the settlement management DB 158 should further include all information about the amount of money that forms the basis for the issuance of the free-Dilling and discount grant for each seller, purchaser and period.

Fig. 7 is a flowchart for determining a random additional discount amount in an open marketplace operating server according to some embodiments of the present invention.

First, a purchaser joins a paid membership at the open marketplace website to perform a product purchase as an applicant for random additional discount S110. Of course, in some cases, a purchaser who is not a paid-member can also be eligible for random additional discount.

If the purchaser decides to purchase the random additional discount item using the purchaser terminal 450 in step S112, the decision signal from the purchaser terminal 450 for the initial price of the random additional discount item (i.e., the original selling price offered by the seller or firstly discounted price offered by the seller using a promotional coupon) is sent to the random additional discount module 114 as a purchase confirmation and, at the same time, request for random additional discount in step S114. Otherwise, a random additional discount request may be performed by the user's choice after initial payment has been made.

The random additional discount module 114 determines a random additional discount amount $D_i$ by applying a discount rate of, for example, 1% to 100% of initial price in response to the random additional discount request from the purchaser terminal 450 in step S116. If the random additional discount is made by providing free-Dilling to the purchase, the ratio of the discounted amount and the free-Dilling amount are 1: 1 or at least they are in directly proportional relation with each other, and thus the free-Dilling amount can be regarded as a random additional discount amount $D_i$. This relationship between the discounted amount and the free-Dilling amount will always be applied throughout the specification unless otherwise specified.

If the random additional discount amount $D_i$ is determined as the random additional discount amount for the product i, the random additional discount module determines the suitability of the random additional discount amount $D_i$ by using the following condition in step S118.

$$\Sigma Cs - \Sigma Ds = \Sigma Ms \geq 0$$

Here, $\Sigma Cs$ is the sum of all sales commissions received from a seller in the open marketplace operating server 100 according to the sales of the products of the seller during a predetermined period, ΣDs is the sum of all random additional discount amounts applied by the random additional discount module 114 to the products sold by the seller during the predetermined period, and ΣMs is the sum of profit or margin of the open marketplace operator given by subtracting the sum of the random additional discount from the sum of the sales commission applied to the products of the seller during the predetermined period.

If the condition of ΣMs ≥ 0 is not satisfied as a result of the suitability determination, the random additional discount module 114 returns in step S120 to the step of determining a new random additional discount amount. If the condition of ΣMs ≥ 0 is satisfied, the random additional discount amount Di or a free-Dilling amount is displayed at the purchaser terminal 450 in step S122.

If the customer accepts and selects the random additional discount amount Di displayed on the purchaser terminal 450, a second payment of the purchased product is made at the final price obtained by deducting the discounted amount (or the corresponding free-Dilling amount from the initial price, or an alternative accumulation of free-Dilling to the purchaser account is made in step S128. Information on the secondary payment and the use or accumulation of the free-Dilling is transmitted via the random additional discount DB 154 to the payment DB 156, the settlement management DB 158, and the purchaser management DB 151 and the seller management DB 152 to be stored therein for use in a post settlement in step S130.

However, the purchaser may not be satisfied with the random additional discount amount Di displayed in the purchaser terminal 450 and may request a new random additional discount again in step S126. In this case, the random additional discount module 114 returns to step S114 to repeat the steps of S116, S118, S120, S122, and S124 for providing a new random additional discount amount to that purchaser.

The post settlement to the results of random additional discounts in step S130 is performed between the settlement management module 118 of the open marketplace operation server 100 and the seller terminal 410 of the seller who sold the corresponding product. The post settlement is preferably performed between the settlement management module 118 and each seller terminal 410, 420, ... on the basis of a predetermined period.

The above process describes a mechanism for providing a random additional discount to a purchaser who purchases a random additional discount item without putting a loss on the open marketplace operator based on transactions for a predetermined period for each seller. Alternatively, it is also possible to provide a random additional discount to the purchaser even if the open marketplace operator incurs some loss on transactions of some sellers for the predetermined period of time, as will be described with reference to Fig. 8.

Fig. 8 is a flow chart for determining a random additional discount amount in an open marketplace operating server according to some embodiments of the present invention.

First, if the purchaser decides to purchase the random additional discount item using the purchaser terminal 450 in step S132, the decision signal from the purchaser terminal 450 for the initial price of the random additional discount item is received by the random additional discount module 114 as a purchase confirmation and a request for random additional discount in S134. Otherwise, a random additional discount request may be performed by the user's selection after initial payment for the initial price has been made.

The random additional discount module 114 determines a random additional discount amount Di by applying a discount rate of, for example, 1% to 100% of initial price in response to the random additional discount request from the purchaser terminal 450 in step S136.

If the random additional discount amount Di is determined as the random additional discount amount for the product i, the random additional discount module determines the suitability of the random additional discount amount Di by using the following condition in step S138.

$$\Sigma C_T - \Sigma D_T = \Sigma M_T \geq 0$$

Here, $\Sigma C_T$ is a sum of all sales commissions received from all sellers in the open marketplace operation server 100 according to the sales of the products for a predetermined period, $\Sigma D_T$ is the sum of all random additional discount amounts applied to all the products sold during the predetermined period, and $\Sigma M_T$ is the sum of profit or margin of the open marketplace operator given by subtracting the sum of the random additional discounts from the sum of the sales commissions based on the sales of all the products during the predetermined period.

If the condition of $\Sigma M_T \geq 0$ is not satisfied as a result of the suitability determination, the random additional discount module 114 returns in step S140 to the step of determining a new random additional discount amount. Then, if the condition of $\Sigma C_T - \Sigma D_T = \Sigma M_T \geq 0$, it is determined again whether the random additional discount amount Di is appropriate by using the following condition in step S142.

$$\Sigma Cs - \Sigma Ds = \Sigma Ms \geq 0$$

Here, ΣCs is the sum of all sales commissions received from the seller of the selling product in the open marketplace operation server 100 according to the sales of the products of the seller during the predetermined period, ΣDs is the sum of all random additional discount amounts applied to the products sold by the seller of the selling product during the predetermined period, and the sum $\Sigma Ms$ is the sum of profit or margin of the open marketplace operator given by subtracting the sum of the random additional discount from the sum of the sales commissions applied to the products of the seller of the selling product during the predetermined period.

If the determined random additional discount amount Di satisfies the condition $\Sigma Cs - \Sigma Ds = \Sigma Ms \geq 0$ for the seller, the random additional discount module 114 may display the determined random additional discount amount Di or the free-Dilling amount corresponding to the random additional discount amount on the purchaser terminal 450 in step S146.

However, if the determined random additional discount amount Di does not satisfy the condition of $\Sigma Ms \geq 0$, the random additional discounting module 114 finally judges the adequacy of the random additional discount amount Di by using the following condition in step S144.

$$\Sigma C_T - \Sigma D_T = \Sigma M_T \geq \Sigma M_{TH}$$

That is, although the sum of the profit or margin of the open marketplace operator according to the sales of the seller of the selling product during the predetermined period is negative, if the sum of the profit of the open marketplace operator due to sales of the products of all sellers including the seller of the selling product during the predetermined period is equal to or greater than the threshold value $M_{TH}$, then the random additional discount amount Di is determined to be adequate to be a random additional discount amount Di to be provided to the purchaser terminal 450.

If the final determination result of the random additional discount amount Di is negative, the flow returns to the random additional discount amount determining step in step S148 and a new random additional discount amount Di generated using a random function is re-set as an initial value for the adequacy determination.

However, if the final determination result of the adequacy of the random additional discount amount Di in the final determination step S144 is affirmative, the random additional discount amount Di or a free-Dilling amount corresponding to the random additional discount amount Di is displayed on the purchaser terminal 450 in step S146 to receive the purchaser's selection in step S150.

If the purchaser accepts and selects the random additional discount amount Di displayed on the purchaser terminal 450, the second or final payment of the purchased product is made at the final price obtained by deducting the discounted amount, or an alternative accumulation of free-Dilling to the purchaser's account is made in step S154. Information on the final payment or the use or accumulation of the free-Dilling is transmitted via the random additional discount DB 154 to the payment DB 156, the settlement management DB 158, the purchaser management DB 151, and the seller management DB 152 to be stored therein for use in a post settlement in the settlement management module 118.

However, the purchaser may not be satisfied with the random additional discount amount Di displayed in the purchaser terminal 450 and may request a new random additional discount again in step S152, and the random additional discount module 114 returns to step S134 to repeat the steps of S136, S138, S140, S142, S144, S148, S146 and S150 for providing a new random additional discount amount to that purchaser.

Through the above process, even if the open marketplace operator loses a certain amount of loss in transactions with a specific seller for a predetermined period, he or she can still apply a random additional discount to the purchaser of a product provided by the specific seller to maximize the benefit of the purchaser by boldly offering a random additional discount as long as he or she can expect that a minimum profit is guaranteed or anticipated considering transactions with the whole sellers during the predetermined period.

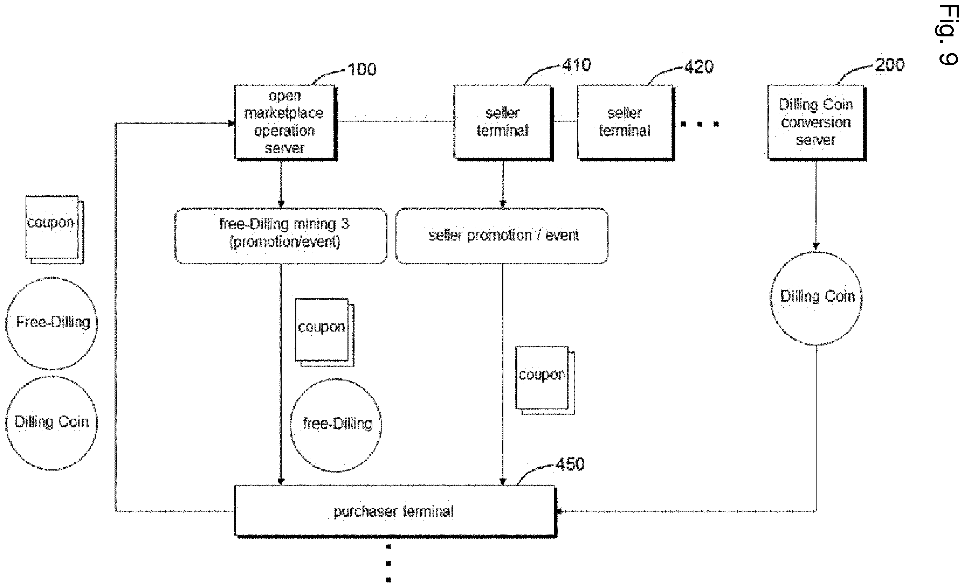

Fig. 9 is a block diagram of a third free-Dilling mining process provided by an open marketplace operating server according to some embodiments of the present invention.

Fig. 9 shows a process of mining free-Dillings using an event provided by the open marketplace operation server 100, which is the third free-Dilling mining process. It also shows a process of providing and using a coupon through a promotion or an event provided by an open marketplace operator or a seller.

Hereinafter, all the benefits provided to purchasers by the open marketplace operator who manages the open marketplace operating server 100 and various sellers who sell their own products are referred to as 'coupon' (except for free-Dilling). The provision of coupon to the purchaser is referred to as 'promotion'. On the other hand, the direct provision of free-Dilling or coupon for a chance of random additional discount to the purchaser by the open marketplace operator via the open marketplace operating server 100 is referred to as an 'event'.

The seller can make the open marketplace operation server 100 to provide with the coupon for promoting sales to the purchaser terminal 450 on the open marketplace. Further, the seller can provide with the coupon to the purchaser through direct communication between the seller terminals 410 and 420 and the purchaser terminals 450. Such a process is a typical coupon providing process, so a detailed description thereof will be omitted.

An open marketplace operator who is the managing entity of the open marketplace operation server 100 may register a plurality of sellers in the open marketplace and perform various promotions for providing coupons on behalf of a part or all of the plurality of sellers or perform a self-event for providing free-Dilling on behalf of a part or all of the plurality of purchasers.

The purchaser in the open marketplace can purchase products using various coupons and free-Dillings stored in the purchaser terminal 450. The purchaser can purchase the products by using the Dilling Coin converted in the Dilling Coin conversion server 200 or the Dilling Coin bought at the normal virtual money transaction server (not shown). Here, the Dilling Coin is a type of virtual money that can be used equally to cash, open marketplace vouchers, credit cards, and other securities. It can also be used for purchasing paid-Dillings and can also be used for obtaining free-Dillings through the first free-Dilling mining process.

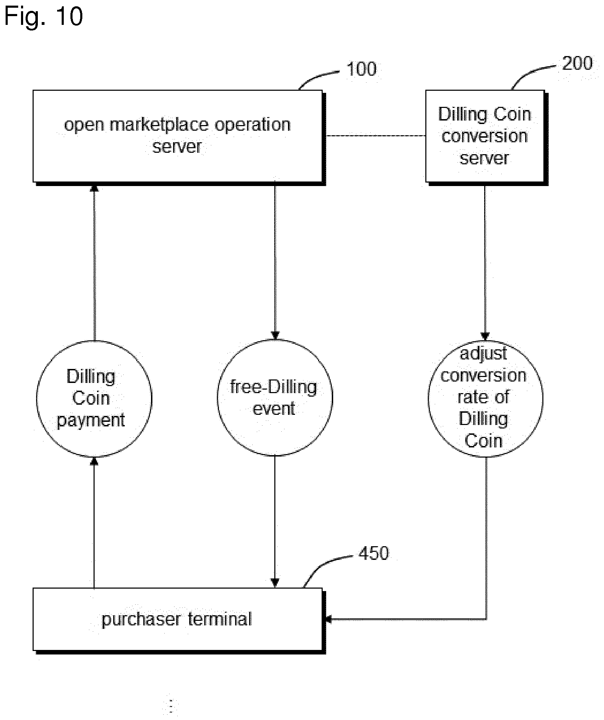

Fig. 10 is a block diagram of a third Free-Dilling mining process provided by an open marketplace operation server according to some embodiments of the present invention.

When a purchaser makes a payment for a product in an open marketplace with a Dilling Coin that is a kind of a virtual money by using the purchaser terminal 450, this action corresponds with the intention of the open marketplace operator of the present invention who is willing to positively provide free-Dillings for active use of Dilling Coin as a virtual money. Thus, the open marketplace operating server 100 provides an event of giving some free-Dillings to the purchaser terminal 450 in response to the purchaser's payment using the Dilling Coin.

In Fig. 10, the free-Dilling events may include the direct provision of free-Dilling in proportion to the purchase amount paid by the Dilling coin, the provision of a predetermined lottery opportunity for obtaining the free-Dilling, the provision of a simple game for acquiring the free-Dilling and provision of recommendation opportunities for acquiring the free-Dillings. Here, the direct provision of additional free-Dilling is preferably performed only when the payment for a purchased product is made by the Dilling Coin.

In Fig. 10, in the Dilling Coin conversion server 200 interoperating with the open marketplace operating server 100 provides a kind benefit to the purchaser by controlling (i.e., increasing) the conversion rate between the free-Dilling and the Dilling Coin (i.e., the amount of Dilling Coin which can be converted from each free-Dilling) for that purchaser. If there is a conversion rate adjustment for a specific purchaser, it is a principle that the open marketplace operator is responsible for the cost of the additional free-Dilling due to the conversion rate adjustment.

It should be noted that the amount of free-Dilling provided through the free-Dilling event by the open marketplace operating server 100 may vary based upon the result or performance of the open marketplace operation in the open marketplace operating server 100 (for example, the sales amount of the open marketplace, total revenue of the open marketplace, the amount of free-Dilling in comparison to paid-Dilling, the profit and profit rate of the open marketplace operator, etc.). If the Dilling Coin issuance amount is changed by adjusting the Dilling Coin conversion rate at the Dilling Coin conversion server 200, the rate of conversion of the Dilling Coin indirectly affects to the result or performance of the open marketplace operation in the open marketplace operating server 100 (for example, the amount of issued paid-Dilling, the amount of free-Dilling in comparison to the amount of paid-Dilling, the profit and profit margin of open marketplace operators, etc.) since the Dilling Coin converted at the Dilling Coin conversion server 200 can be used again at the open marketplace.

If the free-Dillings obtained free of charge through the first, second and third free-Dilling mining processes are used too much in the open marketplace, then the effect of discounting the purchase price of all products increases while the financial burden of the open marketplace operator increases as well. Conversely, when free-Dillings are used in the open marketplace too little, the features of the present invention cannot be exerted on the open marketplace and the the purpose of the present invention cannot be achieved.

Also, since the Dilling Coin conversion rate is a rate to convert the free-Dilling to the Dilling Coin depending on the market price of the Dilling Coin in the virtual money transaction server 300, in principle, the Dilling Coin conversion server 200 may not arbitrarily determine the Dilling Coin conversion rate. However, when there is an exceptional request from the open marketplace operation server 100 for the adjustment of the conversion rate, the entire conversion rate or the conversion rate for a specific purchaser may be adjusted according to the request and the open marketplace operator running the open marketplace operating server 100 will bear the difference in the amount of money generated according to the conversion rate adjustment.

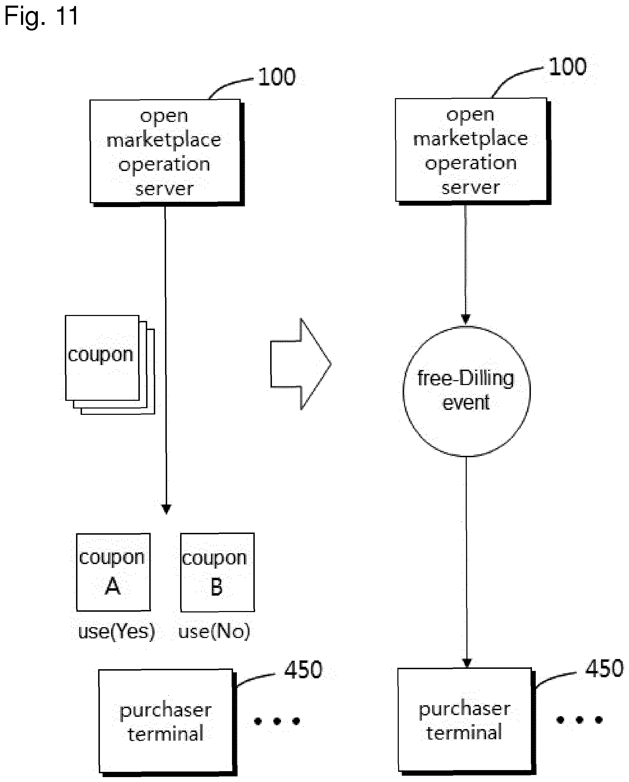

Fig. 11 is an exemplary diagram of a third free-Dilling mining process provided by an open marketplace operating server according to some embodiments of the present invention.

The open marketplace operation server 100 provides a variety of coupons A and B to the purchaser terminal 450 for promotion of sales. In order to achieve the purpose of the promotion and increase sales, the purchaser should actively use the coupon.

Accordingly, in order to encourage the purchaser's use of the coupon, the open marketplace operation server 100 may provide an event of giving additional free-Dillings to the purchaser who used the coupon provided in association with the purchase of product as a kind of the third free-Dilling mining process.

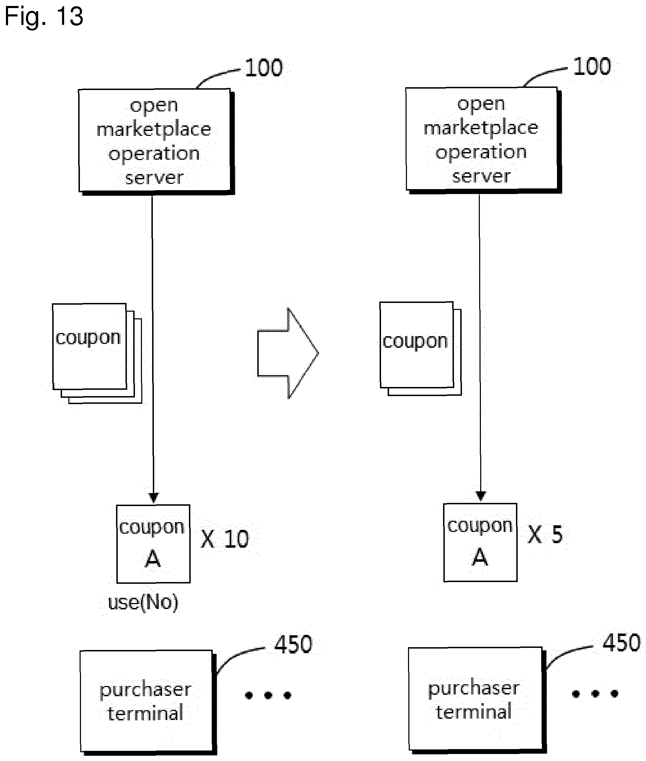

In addition, for promoting the coupon use of the purchaser, it is possible to provide some disadvantages to the purchaser who does not actively use the provided coupon. Such an example will be described with reference to Figs. 13 to 15.

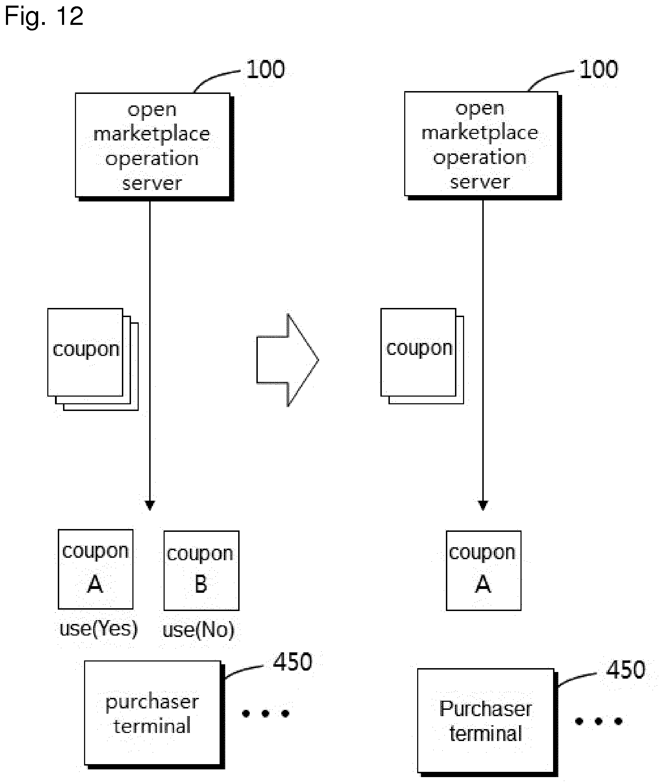

Fig. 12 is an exemplary diagram of coupon usage in an open marketplace operation server according to some embodiments of the present invention.

The open marketplace operating server 100 provides coupon A and B of different kinds to the purchaser terminal 450 and confirms the coupon usage details of the purchaser after a predetermined period or valid period has elapsed.

As a result of checking the coupon usage details of the purchaser, if the ratio of the coupons used within the predetermined period or the valid period of the coupon of a specific kind among the plural kinds of coupons provided to the purchaser is lower than a preset reference or if the coupons are not used at all, then the open marketplace operation server 100 does not further provide coupons with the same or similar characteristics as the unused one to the same purchaser terminal 450.

Fig. 13 is another exemplary diagram of coupon usage in an open marketplace operation server according to some embodiments of the present invention.

The open marketplace operation server 100 provides a plurality of coupons to the purchaser terminal 450 and checks the coupon usage details of the purchaser after a predetermined period or valid period has passed.

As a result of checking the coupon usage details of the purchaser, if the ratio of coupons used within the predetermined period or the valid period is less than a predetermined criterion or the coupons are not used at all, then the open marketplace operation server 100 lowers the amount, frequency or rate of coupon provision to that purchaser terminal 450 when it provides coupons with the same or similar characteristics as the rarely used or unused one to that purchaser terminal 450.

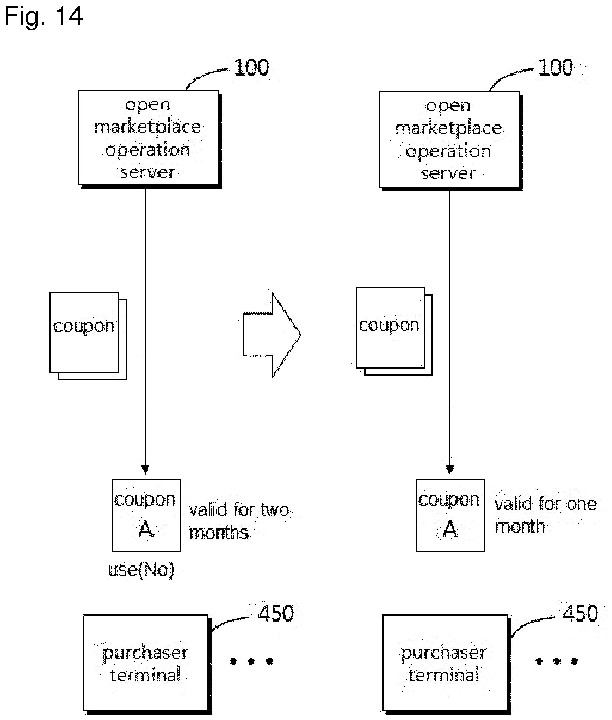

Fig. 14 is another exemplary diagram of coupon usage in an open marketplace operation server according to some embodiments of the present invention.

The open marketplace operating server 100 provides the coupon having a predetermined valid period to the purchaser and checks the coupon usage details of the purchaser after a predetermined valid period has passed.

As a result of checking the coupon usage details of the purchaser, if the ratio of coupons that have been used within the predetermined valid period is lower than a predetermined criterion, then the open marketplace operation server 100 may provide the same coupon with the same or similar characteristics as the previous coupon to the same purchaser terminal 450 while the newly provided coupon has a valid period shorter than that of the previous coupon.

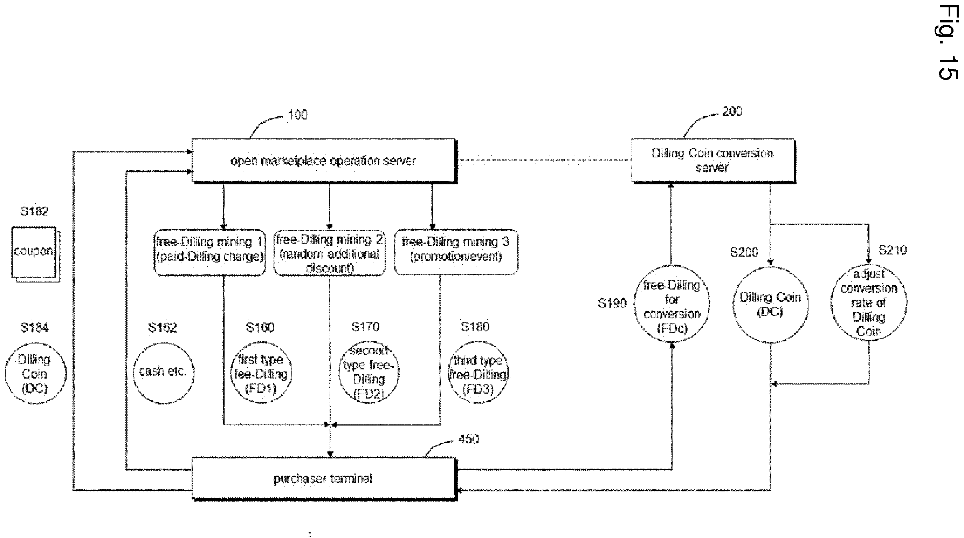

Fig. 15 is a flowchart of a method for generating virtual money through electronic commerce in an open marketplace according to some embodiments of the present invention.

The purchaser terminal 450 can use cash, gift certificate, credit card, other types of securities, virtual money, etc. for electronic commerce in the open marketplace. Preferably, the purchaser terminal 450 can purchase Dillings, that is, paid-Dillings using the cash, gift certificate, credit card, other types of securities, virtual money, etc in step S162.

When purchasing the paid-Dilling by cash or the like, the open marketplace operating server 100 issues the bonus free-Dilling corresponding to a certain portion (for example, 1 to 10%) of the purchase amount and provides it to the purchaser terminal 450. This is referred to as a first free-Dilling mining process in step S160, and the free-Dilling issued in this way is referred to as a first type free-Dilling FD1.

Meanwhile, during the e-commerce process in the open marketplace, the purchaser terminal 450 receives the free-Dilling through the random additional discount procedure, which is referred to as a second free-Dilling mining process in step S170 and the free-Dilling issued in this way is referred to as a second type free-Dilling FD2.

On the other hand, in the open marketplace, the open marketplace operator offers another free-Dilling through various self-events. This is a process in which the purchasers receive the free-Dilling through active participation in e-commerce in the open marketplace. This is referred to as a third free-Dilling mining process in step S180 and the free-Dilling issued in this way is referred to as a third type free-Dilling FD3.

The third free-Dilling mining process in step S180 involves a process in which the purchaser purchases the product using a coupon in step S182 or purchases the product using the Dilling Coin DC in step S184. Throughout these processes, the purchaser may receive the third type free-Dilling FD3 free of charge in step S180 or get an adjustment to the Dilling Coin conversion rate between the his or her free-Dilling and Dilling Coins in step S210.

Meanwhile, the purchaser terminal 450 can use part or all types of the free-Dillings FD1, FD2 and FD3 obtained through the first, second and third free-Dilling mining processes as electronic money for purchasing products or convert them into Dilling Coins DC at the Dilling Coin conversion server 200 in step 200.

The purchaser terminal 450 may access the Dilling Coin conversion server 200 to provide a free-Dilling FDc to be converted in step S190 and receive the Dilling Coin DC according to the conversion rate at that time in step S200. In principle, the conversion rate to the Dilling Coin is determined automatically according to the face value of the free-Dilling and the market value of the Dilling Coin. Herein, the market value of the Dilling Coin is determined by the exchange rate of the Dilling Coin against another virtual money or real money in the virtual money trasaction server 300.

In other words, since the Dilling Coin conversion rate is a rate to convert the free-Dilling to the Dilling Coin depending on the market price of the Dilling Coin in the virtual money transaction server 300, in principle, the Dilling Coin conversion server 200 may not arbitrarily determine the Dilling Coin conversion rate. However, when there is an exceptional request from the open marketplace operation server 100 for the adjustment of the conversion rate, the entire conversion rate or the conversion rate for a specific purchaser may be adjusted according to the request and the open marketplace operator running the open marketplace operating server 100 will bear the difference in the amount of money generated according to the conversion rate adjustment.

For example, when 100 free-Dillings are converted into 100 Dilling Coins the conversion rate is (100/100) * 100% = 100%, when the 100 free-Dillings are converted into 50 Dilling Coins the conversion rate is (50/100) * 100% = 50%, and when the 100 free Dilling is converted to the 200 Dilling coin the conversion rate is (200/100) * 100% = 200%.

Basically, the free-Dilling has a value equivalent to the currency (e.g., Korean Won; KRW) used in the open marketplace operation server 100. Thus, 100 free-Dillings are equivalent to 100 KRW. When 100 Dilling Coin is traded in the virtual money transaction server 300 at the price of 100 KRW, the conversion rate in the Dilling Coin conversion server 200 would be 100% as 100 free-Dillings are converted into 100 Dilling Coins.

However, if the market value of the Dilling Coin rises to 200 KRW at the virtual money transaction server 300 by some reason, the conversion rate at the Dilling Coin conversion server 200 would change to 50% with 50 Dilling Coins per 100 free-Dillings. On the other hand, if the market value of the Dilling Coin drops to to 50 KRW at the virtual money transaction server 300 by some other reason, the conversion rate at the Dilling Coin conversion server 200 would change to 200% with 200 Dilling Coins per 100 free-Dillings.

If open marketplace sales increase due to an increase in purchasers' purchase activity in open marketplace, the volume of issued free-Dilling would also increase and so would the volume of the converted Dilling Coin. As the volume of the Dilling Coin increases, the value of Dilling Coin declines, and the desire for e-commerce using Dilling Coin decreases, eventually reducing the amount of Dilling Coins flowing into the open marketplace, thereby indirectly restraining the increase in sales in the open marketplace.

On the other hand, if purchase activities in the open marketplace decline and sales in the open marketplace decrease, and the volume of free-Dilling decreases, the conversion into Dilling Coins decreases. In this case, the value of the Dilling Coin increases and the amount of Dilling Coin flowing into the open marketplace increases, indirectly contributing to the increase of the sales in the open marketplace.

In addition to the above basic effects, the open marketplace operator can increase the amount of issued free-Dillings by the open marketplace operation server (100) at the cost of reduction in the profitability. Then, the increase in the trade volume of the e-commerce due to the increased amount of free-Dilling may induce the increase in the sales revenue of the open marketplace.

Also, in the case where the open marketplace operation server 100 adjusts the ratio of issuance of free-Dilling for each of the first, second and third free-Dilling mining processes, the random additional discount amount Di is determined not only by the relationship between the seller and the open marketplace operator but also by the amount of the free-Dilling issued in the additional first and third free-Dilling mining processes.

If all the random additional discounts in the second free-Dilling mining process are made through the issuance of free-Dilling, the amount of issued free-Dillings for a predetermined period is determined as $\Sigma D_T$, which is the total amount of the random additional discount during the period, and it is equivalent to the amount free-Dilling $\Sigma D_{T2}$ issued through the second free-Dilling mining process.

During the same period, if the amount free-Dillings issued by the first and third free-Dilling mining processes is denoted as $\Sigma D_{T1}$ and $\Sigma D_{T3}$, respectively, the corrected total amount of free-Dilling $\Sigma D_{Tt}$ may be calculated as follows.

$$\Sigma D_{Tt} = \Sigma D_{T1} + \Sigma D_{T2} + \Sigma D_{T3}$$

Then, the conditions for the determination of random discount amount shall be amended as follows.

$$\Sigma C_T - \Sigma D_{Tt} = \Sigma M_{Tt} \geq 0$$

In order to ensure the minimum margins of the open marketplace operator, the conditions for determining the random discount amount should be modified using the minimum margin $\Sigma M_{THt}$ as follows.

$$\Sigma C_T - \Sigma D_{Tt} = \Sigma M_{Tt} \geq \Sigma M_{THt}$$

The conditional formulas thus modified can be respectively applied to steps S138 and S144 in Fig. 8.

The open marketplace operating server 100 can adjust the rate and amount of the issuance of free-Dillings through the first, second and third free-Dilling mining processes. Thus, when at least part of the free-Dillings issued by the open marketplace operating server 100 are converted into Dilling Coins at the Dilling Coin conversion server 200, the Dilling coin conversion server 200 can adjust the conversion rate in consideration of the amount of free-Dillings to be converted and the market price of the Dilling Coin.

When the conversion rate of the Dilling Coin is adjusted by the Dilling Coin conversion server 200, the value of the free-Dilling is changed according to the increase or decrease of the conversion rate, so that the value of the real money (e.g., Korean Won; KRW) may not correspond to the value of the free-Dilling by 1:1 ratio and the demand of the user to convert the free-Dilling to the Dilling Coin may also be changed according to the conversion rate.

The various embodiments and inventions according to various aspects of the present invention described above can be implemented in the form of a program that can be executed through a computer component and recorded in a computer-readable recording medium.

While the present invention has been described in connection with what is presently considered to be the most practical and preferred embodiments, it is to be understood that the invention is not limited to the disclosed embodiments, but, on the contrary, it will be understood by those skilled in the art that various changes in form and details may be made therein without departing from the spirit and scope of the invention as defined by the appended claims.

DESCRIPTION OF REFERENCE NUMERALS

    100: Open Marketplace Operation Server

    200: Dilling Coin Conversion Server

    300: Virtual Money Transaction server

**Claims**

1. A system for generating virtual money by e-commerce in an open marketplace comprising:

    an open market operation server for providing an electronic money mining process to acquire the electronic money available in the open marketplace through e-commerce in the open marketplace; and
    a virtual money conversion server for converting the electronic money into a predetermined virtual money that can be traded in a virtual money transaction server,
    wherein,
    the open marketplace operation server allows e-commerce in the open marketplace using a purchaser terminal and provides electronic money to the purchaser terminal through the electronic money mining process during the e-commerce process; and
    the virtual money conversion server converts the electronic money in the purchaser terminal into the virtual money at the request of the purchaser terminal.

2. The system of claim 1, wherein the electronic money mining processes comprises:

    a first electronic money mining process for providing the electronic money more than the value of the securities when the electronic money is purchased by the purchaser terminal using the securities including cash;
    a second electronic money mining process for providing an additional discount opportunity after payment at an initial purchase price when purchasing products through electronic commerce by the purchaser terminal and providing electronic money corresponding to the additional discount amount; and
    a third electronic money mining process for providing electronic money through a predetermined event provided by the open marketplace operation server when processing e-commerce by the purchaser terminal.

3. The system of claim 2, wherein, in the second electronic money mining process, the additional discount amount is determined based on the mining amount of the electronic money through the first, the second and the third electronic money mining processes.

4. The system of claim 3, wherein the additional discount amount in the second electronic mining process is determined to a value which satisfies the following condition:

$$\Sigma C_T - \Sigma D_{Tt} = \Sigma M_{Tt} \geq 0$$

where $\Sigma D_{Tt}$ is the sum of the amount of electronic money mined through the first, the second and the third electronic money mining processes for a predetermined period of time, $\Sigma C_T$ is the sum of sales commissions received from all sellers in the open marketplace operation server according to the sales of the products during the predetermined period, and $\Sigma M_T$ is the profit of the open marketplace operator for the predetermined period calculated by subtracting the sum of the amount of electronic money mined in the first, the second and the third electronic money mining processes from the sum of the sales commission based on sales of all products sold in the predetermined period.

5. The system of claim 4, wherein the additional discount amount in the second electronic mining process is determined to a value which further satisfies the following condition:

$$\Sigma C_T - \Sigma D_{Tt} = \Sigma M_{Tt} \geq \Sigma M_{THt}$$

where $\Sigma M_{THt}$ is the threshold margin of the open marketplace operator for the predetermined period.

6. The system of claim 2, wherein, in the third electronic money mining process, the electronic money is given to purchaser free of charge at the time of purchasing product using a virtual money that has been converted in the virtual money conversion server.

7. The system of claim 2, wherein, in the third electronic money mining process, the conversion rate between the electronic money and the virtual money in the virtual money conversion server is adjusted for a purchaser at the time of purchasing product using a virtual money that has been converted in the virtual money conversion server.

8. The system of claim 2, wherein, in the third electronic money mining process, the electronic money is given to purchaser free of charge at the time of purchasing product using an event provided by the open marketplace operation server.

9. The system of claim 8, wherein, when the coupon provided by the event is not used by the purchaser terminal for a certain period of time, the provision of the same or similar coupon to the purchaser terminal is suspended.

10. The system of claim 8, wherein, when the coupon provided by the event is not used by the purchaser terminal for a certain period of time, the number of coupons provided to the purchaser terminal is reduced.

11. The system of claim 8, wherein, when the coupon provided by the event is not used by the purchaser terminal for a certain period of time, the valid period of the coupon provided to the purchaser terminal is reduced.

12. The system of claim 2, wherein the conversion rate between the electronic money and the virtual money is determined in the virtual money conversion server based on the face value of the electronic money and the market value of the virtual money.

13. The system of claim 2, wherein the conversion rate between the electronic money and the virtual money is determined in the virtual money conversion server based on the amount of the mined electronic money and the market value of the virtual money.

14. The system of claim 2, wherein the conversion rate between the electronic money and the virtual money is adjusted by the virtual money conversion server.

15. The system of claim 14, wherein, when the conversion rate between the electronic money and the virtual money is adjusted by the virtual money conversion server, the open marketplace operation server bears the financial difference of the electronic money due to the adjustment of the conversion rate.

16. A method for generating virtual money by e-commerce in an open marketplace performed by a virtual money generation system including an open market operation server for providing an electronic money mining process to acquire the electronic money available in the open marketplace and a virtual money conversion server for converting the electronic money into a predetermined virtual money that can be traded in a virtual money transaction server, comprising:

providing, at the open marketplace operation server, the electronic money to a purchaser terminal through the electronic money mining process during the e-commerce process in the open marketplace;
converting, at the virtual money conversion server, the electronic money in the purchaser terminal into the virtual money at the request of the purchaser terminal.

17. The method of claim 16, wherein the electronic money mining processes comprises:

a first electronic money mining process for providing the electronic money more than the value of the securities when the electronic money is purchased by the purchaser terminal using the securities including cash;
a second electronic money mining process for providing an additional discount opportunity after payment at an initial purchase price when purchasing products through electronic commerce by the purchaser terminal and providing electronic money corresponding to the additional discount amount; and
a third electronic money mining process for providing electronic money through a predetermined event provided by the open marketplace operation server when processing e-commerce by the purchaser terminal.

18. The method of claim 17, wherein, in the second electronic money mining process, the additional discount amount is determined based on the mining amount of the electronic money through the first, the second and the third electronic money mining processes.

19. The method of claim 18, wherein the additional discount amount in the second electronic mining process is determined to a value which satisfies the following condition:

$$\Sigma C_T - \Sigma D_{Tt} = \Sigma M_{Tt} \geq 0$$

where $\Sigma D_{Tt}$ is the sum of the amount of electronic money mined through the first, the second and the third electronic money mining processes for a predetermined period of time, $\Sigma C_T$ is the sum of sales commissions received from all sellers in the open marketplace operation server according to the sales of the products during the predetermined period, and $\Sigma M_T$ is the profit of the open marketplace operator for the predetermined period calculated by subtracting the sum of the amount of electronic money mined in the first, the second and the third electronic money mining processes from the sum of the sales commission based on sales of all products sold in the predetermined period.

20. The method of claim 19, further comprising:

performing payment of the purchased product in response to the payment signal from the purchaser terminal;
determining the random additional discount amount Di in response to the request for random additional discount from the purchaser terminal;
determining if the random additional discount amount Di satisfies the condition $\Sigma C_T - \Sigma D_{Tt} = \Sigma M_{Tt} \geq 0$;
returning to the step of determining the random additional discount amount if the random additional discount amount Di dose not satisfy the condition and displaying the random additional discount amount Di on the purchaser terminal if the random additional discount amount Di satisfies the condition; and
returning to the step of determining the random additional discount amount if the random additional discount amount Di is rejected by the purchaser terminal and providing electronic money to the purchaser terminal corresponding to the confirmed random additional discount amount if the random additional discount amount Di is confirmed by the purchaser terminal.

21. The method of claim 19, wherein the additional discount amount in the second electronic mining process is determined to a value which further satisfies the following condition:

$$\Sigma C_T - \Sigma D_{Tt} = \Sigma M_{Tt} \geq \Sigma M_{THt}$$

where $\Sigma M_{THt}$ is the threshold margin of the open marketplace operator for the predetermined period.

22. The method of claim 21, further comprising:

performing payment of the purchased product in response to the payment signal from the purchaser terminal;

determining the random additional discount amount Di in response to the request for random additional discount from the purchaser terminal;
determining if the random additional discount amount Di satisfies the condition $\Sigma C_T - \Sigma D_{Tt} = \Sigma M_{Tt} \geq \Sigma M_{THt}$;
returning to the step of determining the random additional discount amount if the random additional discount amount Di dose not satisfy the condition and displaying the random additional discount amount Di on the purchaser terminal if the random additional discount amount Di satisfies the condition; and
returning to the step of determining the random additional discount amount if the random additional discount amount Di is rejected by the purchaser terminal and providing electronic money to the purchaser terminal corresponding to the confirmed random additional discount amount if the random additional discount amount Di is confirmed by the purchaser terminal.

23. The method of claim 17, wherein the additional discount amount in the second electronic mining process is determined to a value which satisfies the following condition:

$$\Sigma Cs - \Sigma Ds = \Sigma Ms \geq 0$$

where $\Sigma Cs$ is the sum of all sales commissions received from the seller of the selling product in the open marketplace operation server according to the sales of the products of the seller during the predetermined period, $\Sigma Ds$ is the sum of all random additional discount amounts applied to the products sold by the seller of the selling product during the predetermined period, and the sum $\Sigma Ms$ is the sum of profit or margin of the open marketplace operator given by subtracting the sum of the random additional discount from the sum of the sales commissions applied to the products of the seller of the selling product during the predetermined period.

24. The method of claim 23, further comprising:

performing payment of the purchased product in response to the payment signal from the purchaser terminal;
determining the random additional discount amount Di in response to the request for random additional discount from the purchaser terminal;
determining if the random additional discount amount Di satisfies the condition $\Sigma Cs - \Sigma Ds = \Sigma Ms \geq 0$;
returning to the step of determining the random additional discount amount if the random additional discount amount Di dose not satisfy the condition and displaying the random additional discount amount Di on the purchaser terminal if the random additional discount amount Di satisfies the condition; and

returning to the step of determining the random additional discount amount if the random additional discount amount Di is rejected by the purchaser terminal and providing electronic money to the purchaser terminal corresponding to the confirmed random additional discount amount if the random additional amount Di is confirmed by the purchaser terminal.

25. The method of claim 17, wherein the additional discount amount in the second electronic mining process is determined to a value which satisfies the following conditions:

$$\Sigma C_T - \Sigma D_T = \Sigma M_T \geq 0;$$

$$\Sigma Cs - \Sigma Ds = \Sigma Ms < 0;$$

and

$$\Sigma C_T - \Sigma D_T = \Sigma M_T \geq \Sigma M_{TH}$$

where $\Sigma C_T$ is the sum of sales commissions received from all sellers in the open marketplace operation server according to the sales of the products during the predetermined period; $\Sigma D_T$ is the sum of the amount of all additional discounts during the predetermined period; $\Sigma M_T$ is the profit of the open marketplace operator for the predetermined period calculated by subtracting the sum of the amount of all additional discounts from the sum of the sales commission received from all sellers based on the sales of the products during the predetermined period; $\Sigma M_{TH}$ is the threshold margin of the open marketplace operator set by the open marketplace operation server for all sales of products for the predetermined period; $\Sigma Cs$ is the sum of all sales commissions received from the seller of the selling product in the open marketplace operation server according to the sales of the products of the seller during the predetermined period; $\Sigma Ds$ is the sum of all random additional discount amounts applied to the products sold by the seller of the selling product during the predetermined period; and $\Sigma Ms$ is the sum of profit or margin of the open marketplace operator given by subtracting the sum of the random additional discount from the sum of the sales commissions applied to the products of the seller of the selling product during the predetermined period.

26. The method of claim 25, further comprising:

performing payment of the purchased product in response to the payment signal from the purchaser terminal;

determining the random additional discount amount Di in response to the request for random additional discount from the purchaser terminal;

determining if the random additional discount amount Di satisfies the condition $\Sigma C_T - \Sigma D_T = \Sigma M_T \geq 0$;

returning to the step of determining the random additional discount amount if the random additional discount amount Di dose not satisfy the condition and, otherwise, determining if the random additional discount amount Di satisfy the second condition $\Sigma Cs - \Sigma Ds = \Sigma Ms \geq 0$;

displaying the random additional discount amount Di on the purchaser terminal if the random additional discount amount Di satisfies the second condition and, otherwise, determining if the random additional discount amount Di satisfy the third condition $\Sigma C_T - \Sigma D_T = \Sigma M_T \geq M_{TH}$;

returning to the step of determining the random additional discount amount if the random additional discount amount Di does not satisfy the third condition and, otherwise, displaying the random additional amount Di on the purchaser terminal; and

returning to the step of determining the random additional discount amount if the random additional discount amount Di is rejected by the purchaser terminal and providing electronic money to the purchaser terminal corresponding to the confirmed random additional discount amount if the random additional amount Di is confirmed by the purchaser terminal.

27. The method of claim 16, wherein, in the step of converting the electronic money to the virtual money in response to the request from the purchaser terminal, the conversion rate between the electronic money and the virtual money is determined based on the face value of the electronic money and the market value of the virtual money.

28. The method of claim 16, wherein, in the step of converting the electronic money to the virtual money in response to the request from the purchaser terminal, the conversion rate between the electronic money and the virtual money is determined based on the amount of the mined electronic money and the market value of the virtual money.

29. The method of claim 16, wherein, in the step of converting the electronic money to the virtual money in response to the request from the purchaser terminal, the conversion rate between the electronic money and the virtual money is adjusted by the virtual money conversion server.

Fig. 1

100 open marketplace operation server — S100 — electronic money mining process — R1: electronic money region

200 virtual money conversion server — S200 — virtual money conversion process — R2: money conversion region

300 virtual money transaction server — S300 — virtual money use process — R3: virtual money region

# Fig. 2

Fig. 3

200

Dilling Coin conversion server

300

virtual money transaction server

Dilling Coin

Dilling Coin

Bitcoin

Etherium

400

purchaser terminal

seller terminal

...

Fig. 4

## Fig. 5

400

**open marketplace operation server 100**

- communication unit 130
- control unit 140
- storage unit 150
- input/output unit 160

- purchaser management module 110
- seller management module 112
- random additional discount module 114
- payment management module 116
- settlement management module 118
- open marketplace web module 120

- seller terminal 410
- seller terminal 420
- purchaser terminal 450
- purchaser terminal 460

Fig. 6

EP 3 462 395 A1

storage unit 150

| purchaser mngmt DB | ~151 |
|---|---|
| personal info |
| payment info |
| rating info |
| membership fee info |
| paid-Dilling info |
| free-Dilling info |
| Dilling Coin info |
| coupon info |

| payment mngmt DB | ~156 |
|---|---|
| payment info per purchaser |
| payment info per seller |
| payment info per product |

| seller mngmt DB | ~152 |
|---|---|
| personal info |
| payment info |
| rating info |
| membership fee info |
| paid-Dilling info |
| free-Dilling info |
| Dilling Coin info |
| coupon info |
| promotion/event info |

| random additional discount DB | ~154 |
|---|---|
| random additional discount amount calculation algorithm |
| rating info per seller |
| rating info per purchaser |
| random additional discount mark info |
| random additional discount number info |
| random additional discount item info |
| open marketplace promotion/event info |
| free-Dilling info per purchaser |
| free-Dilling info per seller |

| settlement mngmt DB | ~158 |
|---|---|
| payment info per seller |
| payment info per purchaser |
| discount grant calculation info per seller |
| discount grant calculation info per purchaser |
| discount grant calculation info per period |
| sales commission info per seller |
| membership fee info per seller |
| membership fee info per purchaser |

# Fig. 7

```
┌─────────────────────────────────────────┐
│          join a paid membership          │──── S110
└─────────────────────────────────────────┘
                    │
                    ▼
┌─────────────────────────────────────────┐
│            purchase decision             │──── S112
└─────────────────────────────────────────┘
                    │
                    ▼
┌─────────────────────────────────────────┐
│    request for random additional discount │──── S114
└─────────────────────────────────────────┘
                    │
                    ▼
┌─────────────────────────────────────────┐
│ determine random additional discount amount  Di │──── S116
└─────────────────────────────────────────┘
                    │
                    ▼
          ◇ ∑Cs - ∑Ds = ∑Ms ≥ 0 ◇──── S118
                    │ Yes
                    ▼
┌─────────────────────────────────────────┐
│  display random additional discount amount Di │──── S122
└─────────────────────────────────────────┘
                    │
                    ▼
          ◇ purchaser's confirmation of Di ? ◇──── S124
                    │ Yes
                    ▼
┌─────────────────────────────────────────┐
│ second & discounted payment,  or free-Dilling │──── S128
└─────────────────────────────────────────┘
                    │
                    ▼
┌─────────────────────────────────────────┐
│  settle results of random additional discount │──── S130
└─────────────────────────────────────────┘
```

S126   S120   No

$$\sum Cs - \sum Ds = \sum Ms \geq 0$$

No

**Fig. 8**

purchase decision — S132

request for random additional discount — S134

request for random additional discount Di — S136

$\sum C_T - \sum D_T \geq 0$ — S138

No

Yes

$\sum C_S - \sum D_S \geq 0$ — S142

No

Yes

$\sum M_T \geq M_{TH}$ — S144

Yes

No

request for random additional discount — S146

purchaser's confirmation of Di ? — S150

No

Yes

second & discounted payment, or free-Dilling — S154

settle results of random additional discount — S156

S152

S140

S148

Fig. 9

Fig. 10

# Fig. 11

Fig. 12

Fig. 13

100

open
marketplace
operation
server

coupon

coupon
A    X 10

use(No)

⟹

100

open
marketplace
operation
server

coupon

coupon
A    X 5

450

purchaser
terminal    • • •

450

purchaser
terminal    • • •

Fig. 14

Fig. 15

Europäisches
Patentamt

European
Patent Office

Office européen
des brevets

**EUROPEAN SEARCH REPORT**

Application Number

EP 18 19 7065

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 101 591 244 B1 (COINPLUG LNC [KR]) 5 February 2016 (2016-02-05) * abstract * * figure 1 * * paragraphs [0001] - [0073] * ----- | 1-29 | INV. G06Q20/06 G06Q20/38 |
| A | US 2003/004869 A1 (SHIGEMI KAZUHIKO [JP] ET AL) 2 January 2003 (2003-01-02) * abstract * * figures 1-3 * * paragraphs [0031] - [0068] * ----- | 1-29 | |
| A | US 2017/200181 A1 (KANG CHAN GO [KR]) 13 July 2017 (2017-07-13) * abstract * * figures 1-3 * * paragraphs [0014] - [0042] * ----- | 1-29 | |

TECHNICAL FIELDS SEARCHED (IPC)

G06Q

The present search report has been drawn up for all claims

| Place of search | Date of completion of the search | Examiner |
|---|---|---|
| The Hague | 1 February 2019 | Horat, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 19 7065

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2019

| Patent document cited in search report | | | Publication date | Patent family member(s) | | | Publication date |
|---|---|---|---|---|---|---|---|
| KR 101591244 | B1 | | 05-02-2016 | NONE | | | |
| US 2003004869 | A1 | | 02-01-2003 | JP<br>KR<br>US | 2003016367<br>20030004013<br>2003004869 | A<br>A<br>A1 | 17-01-2003<br>14-01-2003<br>02-01-2003 |
| US 2017200181 | A1 | | 13-07-2017 | AU<br>CA<br>CN<br>KR<br>US | 2016202389<br>2927481<br>106960357<br>101645402<br>2017200181 | A1<br>A1<br>A<br>B1<br>A1 | 27-07-2017<br>12-07-2017<br>18-07-2017<br>04-08-2016<br>13-07-2017 |

EPO FORM P0459

For more details about this annex : see Official Journal of the European Patent Office, No. 12/82

## REFERENCES CITED IN THE DESCRIPTION

**Patent documents cited in the description**

- KR 1020170125788

- KR 101591244